# EUROPEAN PATENT SPECIFICATION

(11) **EP 4 340 494 B1**
(45) Date of publication and mention of the grant of the patent: **23.04.2025**
(21) Application number: 21952457.6
(22) Date of filing: 06.08.2021
(51) Int. Cl.: H04W 72/04, H04W 72/0446, H04W 72/12

(54) **WIRELESS COMMUNICATION METHOD, TERMINAL DEVICE, AND NETWORK DEVICE**
DRAHTLOSKOMMUNIKATIONSVERFAHREN, ENDGERÄTEVORRICHTUNG UND NETZWERKVORRICHTUNG
PROCÉDÉ DE COMMUNICATION SANS FIL, DISPOSITIF TERMINAL ET DISPOSITIF RÉSEAU

(43) Date of publication of application: 20.03.2024
(73) Proprietor: GUANGDONG OPPO MOBILE TELECOMMUNICATIONS CORP., LTD., Dongguan, Guangdong 523860 (CN)
(72) Inventor: WU, Zuomin, Dongguan, Guangdong 523860 (CN)
(74) Representative: Novagraaf Technologies
(86) International application number: PCT/CN2021/111363
(87) International publication number: WO 2023/010586

(56) References cited:
- WO-A1-2021/062726
- WO-A1-2021/066711
- ZTE: "Discussion on timing relationship for IoT-NTN", vol. RAN WG1, no. e-Meeting; 20210510 - 20210527, 12 May 2021 (2021-05-12), XP052011273, Retrieved from the Internet <URL:https://ftp.3gpp.org/tsg_ran/WG1_RL1/TSGR1_105-e/Docs/R1-2105195.zip R1-2105195 Discussion on timing relationship for IoT-NTN.docx> [retrieved on 20210512]
- MODERATOR (SAMSUNG): "Summary#2 of enhancements on HARQ", vol. RAN WG1, no. e-Meeting; 20210412 - 20210420, 20 April 2021 (2021-04-20), XP051996570, Retrieved from the Internet <URL:https://ftp.3gpp.org/tsg_ran/WG1_RL1/TSGR1_104b-e/Inbox/R1-2103804.zip R1-2103804.docx> [retrieved on 20210420]
- MODERATOR (SONY): "FL summary of AI 8.15.3 Timing relationship for IoT-NTN", vol. RAN WG1, no. E-meeting; 20210125 - 20210205, 3 February 2021 (2021-02-03), XP052170825, Retrieved from the Internet <URL:https://ftp.3gpp.org/tsg_ran/WG1_RL1/TSGR1_104-e/Docs/R1-2101949.zip R1-2101949_AI8_15_3 FL_Summary IoT NTN timing relationships.docx> [retrieved on 20210203]
- ERICSSON: "On DRX, LCP, timing, HARQ, SR/BSR, and CG and SPS", vol. RAN WG2, no. Electronic meeting; 20210519, 10 May 2021 (2021-05-10), XP052007458, Retrieved from the Internet <URL:https://ftp.3gpp.org/tsg_ran/WG2_RL2/TSGR2_114-e/Docs/R2-2106089.zip R2-2106089 - On DRX LCP timing HARQ SR BSR and CG and SPS.docx> [retrieved on 20210510]
- ERICSSON: "On DRX, LCP, timing, HARQ, SR/BSR, and CG and SPS", 3GPP DRAFT; R2-2106089, vol. RAN WG2, 10 May 2021 (2021-05-10), pages 1 - 35, XP052007458
- ERICSSON: "On scheduling, HARQ, and DRX for NTN", 3GPP DRAFT; R2-2010168, vol. RAN WG2, 22 October 2020 (2020-10-22), pages 1 - 13, XP051942854
- ERICSSON: "On scheduling, HARQ, and DRX for NTNs", 3GPP DRAFT; R2-2103950, vol. RAN WG2, 1 April 2021 (2021-04-01), pages 1 - 26, XP051992321

## Description

### TECHNICAL FIELD

Embodiments of the present disclosure relate to the communication field, in particular to wireless communication methods, a terminal device and a network device.

### BACKGROUND

Terminal devices in an Internet of Things NTN (IoT-NTN) system do not have an ability to use a Global Navigation Satellite System (GNSS) module and transmit/receive data in the IoT-NTN system simultaneously. In addition, the terminal devices may not have an ability to receive and transmit signals simultaneously. Furthermore, because a propagation delay in NTN system is large, that is, a range of timing advance (TA) value is also large, an uplink-downlink timing relationship in a terrestrial network (TN) system is not suitable for an uplink-downlink timing relationship in the IoT-NTN system, which makes the terminal device in the IoT-NTN system unable to monitor a control channel effectively, and a reliability of communication is reduced.

Related technologies are known from the document entitled "Discussion on timing relationship for IoT-NTN", 3GPP DRAFT; R1-2105195, by ZTE, which discusses time relationships enhancement; and the document entitled "Summary#2 of enhancements on HARQ", 3GPP DRAFT; R1-210384, by MODERATOR (SAMSUNG), which summarizes enhancements on HARQ.

Therefore, how to make the terminal device in the IoT-NTN system can monitor the control channel effectively to improve the reliability of communications is an urgent technical problem to be solved in this field.

### SUMMARY

In embodiments of the present disclosure, there is provided a wireless communication method, a terminal device and a network device, for effectively monitoring a control channel candidate in a wireless communication system.

### BRIEF DESCRIPTION OF THE DRAWINGS

FIG. 1 to FIG. 3 are schematic block diagrams of system frameworks provided by embodiments of the present disclosure.
FIG. 4 and FIG. 5 are schematic diagrams of NTN scenarios based on a transparent payload satellite and a regenerative payload satellite respectively.
FIG. 6 and FIG. 7 are examples of timing relationships in an IoT-NTN system provided by embodiments of the present disclosure.
FIG. 8 to FIG. 12 are examples of monitoring manners of a control channel in an NB-IoT system provided by embodiments of the present disclosure.
FIG. 13 is a schematic interaction diagram of a wireless communication method provided by an embodiment of the present disclosure.
FIG. 14 and FIG. 15 are examples of a first time unit and a second time unit provided by embodiments of the present disclosure.
FIG. 16 is another schematic interaction diagram of a wireless communication method provided by an embodiment of the present disclosure.
FIG. 17 and FIG. 18 are other examples of a first time unit and a second time unit provided by an embodiment of the present disclosure.
FIG. 19 is a schematic block diagram of a terminal device provided by a non-claimed embodiment of the present disclosure.
FIG. 20 is a schematic block diagram of a network device provided by a non-claimed embodiment of the present disclosure.
FIG. 21 is a schematic block diagram of a communication device provided by an embodiment of the present disclosure.
FIG. 22 is a schematic block diagram of a chip provided by a non-claimed embodiment of the present disclosure.

### DETAILED DESCRIPTION

The technical solutions in the embodiments of the present disclosure will be described below with reference to the accompanying drawings.

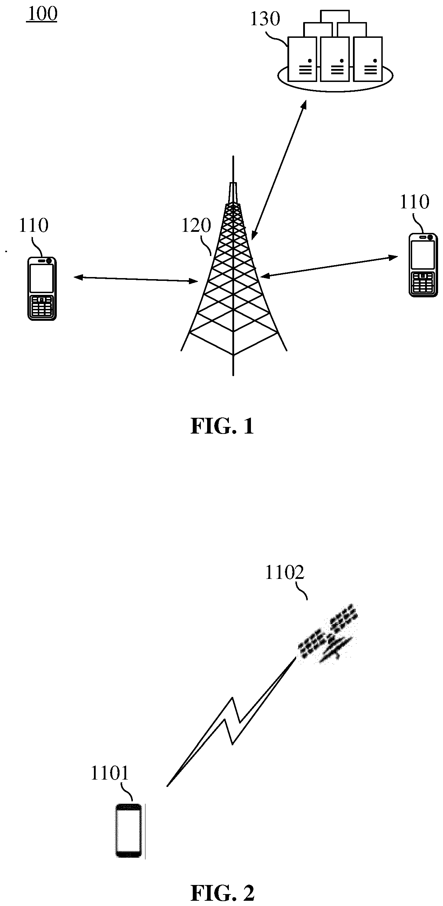

FIG. 1 is a schematic diagram of an application scenario according to an embodiment of the present disclosure.

As illustrated in FIG. 1, the communication system 100 may include terminal devices 110 and a network device 120. The network device 120 may communicate with the terminal devices 110 through an air interface. Multi-service transmission is supported between the terminal devices 110 and the network device 120.

It should be understood that the embodiments of the present disclosure are illustrative only with the communication system 100 but are not limited thereto. That is, the technical solution of the embodiments of the present disclosure may be applied to various communication systems, such as a Long Term Evolution (LTE) system, an LTE Time Division Duplex (TDD), a Universal Mobile Telecommunications System (UMTS), an Internet of Things (IoT) system, a Narrow Band Internet of Things (NB-IoT) system, an enhanced Machine-Type Communications (eMTC) system, a 5G communication system (also called New Radio (NR) communication system), or a future communication system, etc.

In the communication system 100 illustrated in FIG. 1, the network device 120 may be an access network device that communicates with the terminal devices 110. The access network device may provide communication coverage for a particular geographic area and may communicate with the terminal devices 110 (e.g. UE) located within the coverage area.

The network device 120 may be an Evolutional Node B (eNB or eNodeB) in a Long Term Evolution (LTE) system, or a Next Generation Radio Access Network (NG RAN) device, or a gNB in an NR system, or a wireless controller in a Cloud Radio Access Network (CRAN), or the network device 120 may be a relay station, an access point, a vehicle-mounted device, a wearable device, a hub, a switch, a bridge, a router, or a network device in a future evolved Public Land Mobile Network (PLMN), etc.

The terminal device 110 may be any terminal device including, but being not limited to, a terminal device in wired or wireless connection with the network device 120 or other terminal devices.

For example, the terminal device 110 may refer to an access terminal, User Equipment (UE), a subscriber unit, a subscriber station, a mobile station, a mobile platform, a remote station, a remote terminal, a mobile device, a user terminal, a terminal, a wireless communication device, a user agent, or a user device. The access terminal may be a cellular phone, a cordless phone, a session initiation protocol (SIP) telephone, an IoT device, a satellite handheld terminal, a wireless local loop (WLL) station, a personal digital assistant (PDA), a handheld device with wireless communication function, a computing device or other processing device connected to wireless modem, an in-vehicle device, a wearable device, a terminal device in future 5G network or a terminal device in the future evolved network, etc.

The terminal devices 110 may be used for Device to Device (D2D) communication.

The wireless communication system 100 may also include a core network device 130 that communicates with a base station. The core network device 130 may be a 5G Core (5GC) device, for example, an Access and Mobility Management Function (AMF), another example, an Authentication Server Function (AUSF), another example, a User Plane Function (UPF), and another example, a Session Management Function (SMF). Optionally, the core network device 130 may also be an Evolved Packet Core (EPC) device of the LTE network, for example, a Session Management Function + Core Packet Gateway (SMF+PGW-C) device. It should be understood that SMF+PGW-C can achieve the same functions as SMF and PGW-C simultaneously. In the process of network evolution, the core network device may also be called by other names, or a new network entity may be formed by dividing the functions of the core network, which is not limited by the embodiments of the present disclosure.

Each functional unit in the communication system 100 may also establish a connection through a next generation (NG) interface to realize communication.

For example, the terminal device establishes an air interface connection with the access network device through an NR interface for transmitting user plane data and control plane signaling. The terminal device may establish control plane signaling connection with AMF through NG interface 1 (abbreviated as N1). An access network device such as a next generation radio access base station (gNB) may establish a user plane data connection with a UPF through an NG interface 3 (abbreviated as N3). The access network device may establish a control plane signaling connection with AMF through NG interface 2 (abbreviated as N2). UPF may establish a control plane signaling connection with SMF through NG interface 4 (abbreviated as N4). UPF may exchange user plane data with data network through NG interface 6 (abbreviated as N6). AMF may establish a control plane signaling connection with SMF through NG interface 11 (abbreviated as N11). SMF may establish a control plane signaling connection with PCF through NG interface 7 (abbreviated as N7).

FIG. 1 exemplarily illustrates a base station, a core network device and two terminal devices. Optionally, the wireless communication system 100 may include multiple base stations and other numbers of terminal devices may be included within the coverage of each base station, which is not limited by embodiments of the present disclosure.

3GPP is studying a Non Terrestrial Network (NTN) technology, which provides communication services to terrestrial users by means of satellite communication. Compared with terrestrial cellular network communication, the satellite communication has many unique advantages. First of all, the satellite communication is not limited by areas for the user. For example, a general land communication cannot cover areas such as oceans, mountains, deserts, etc., where the communication device cannot be set up or communication coverage cannot be done due to sparse population. For the satellite communication, because a satellite may cover a large ground and the satellite may orbit around the earth, every corner of the earth may be covered by satellite communication theoretically. Secondly, the satellite communication has great social value. The satellite communication may be covered at a lower cost in remote mountainous areas and poor and backward countries or regions, so that people in these areas can enjoy advanced voice communication and mobile Internet technology, which is conducive to narrowing the digital divide with developed areas and promoting the development of these areas. Thirdly, the satellite communication has far communication distance, and the communication cost does not increase significantly with the increase of communication distance. Finally, the satellite communication has high stability and is not limited by natural disasters.

The NTN technology may be combined with various communication systems. For example, the NTN technology may be combined with NR system to form an NR-NTN system. For another example, the NTN technology may be combined with Internet of Things (IoT) system of to form an IoT-NTN system. As an example, the IoT-NTN system may include an NB-IoT-NTN system and an eMTC-NTN system.

FIG. 2 is a schematic diagram of another communication system architecture provided by an embodiment of the present disclosure.

As illustrated in FIG. 2, a terminal device 1101 and a satellite 1102 are included, and wireless communication may be performed between the terminal device 1101 and the satellite 1102. The network formed between the terminal device 1101 and the satellite 1102 may also be referred to as an NTN. In the communication system architecture illustrated in FIG. 2, the satellite 1102 may have the functions of a base station and there may be direct communication between the terminal device 1101 and the satellite 1102. Under the system architecture, the satellite 1102 may be called a network device. In some embodiments of the present disclosure, the communication system 100 may include multiple network devices 1102 and other numbers of terminal devices may be included within the coverage of each network device 1102, which is not limited by embodiments of the present disclosure.

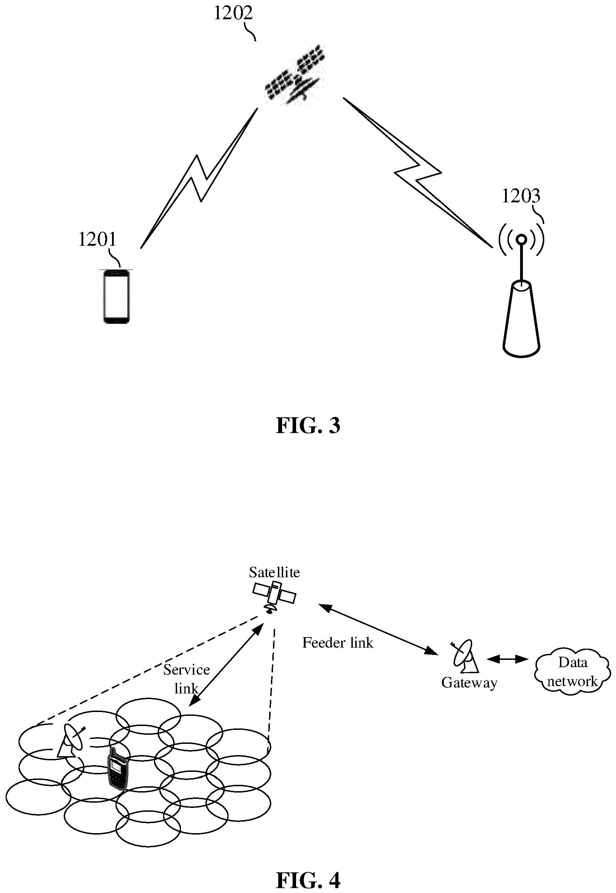

FIG. 3 is a schematic diagram of another communication system architecture provided by an embodiment of the present disclosure.

As illustrated in FIG. 3, a terminal device 1201, a satellite 1202 and a base station 1203 are included, a wireless communication may be performed between the terminal device 1201 and the satellite 1202, and a communication may be performed between the satellite 1202 and the base station 1203. The network formed among the terminal device 1201, the satellite 1202 and the base station 1203 may also be referred to as an NTN. In the communication system architecture illustrated in FIG. 3, the satellite 1202 may not have the functions of a base station, and the communication between the terminal device 1201 and the base station 1203 requires a transit through the satellite 1202. Under the system architecture, the base station 1203 may be called a network device. In some embodiments of the present disclosure, the communication system 100 may include multiple network devices 1203 and other numbers of terminal devices may be included within the coverage of each network device 1203, which is not limited by embodiments of the present disclosure. The network device 1203 may be the network device 120 in FIG. 1.

It should be understood that the above satellite 1102 or satellite 1202 include, but are not limited to:
a Low-Earth Orbit (LEO) satellite, a Medium-Earth Orbit (MEO) satellite, a Geostationary Earth Orbit (GEO) satellite, a High Elliptical Orbit (HEO) satellite, and the like. Satellites may cover the ground with multiple beams. For example, a satellite may form dozens or even hundreds of beams to cover the ground. In other words, a satellite beam may cover the ground area with a diameter of tens to hundreds of kilometers, so as to ensure the coverage of satellites and improve a system capacity of a whole satellite communication system.

As an example, a height range of LEO may be 500 km~1500 km, its corresponding orbital period may be about 1.5 hours~2 hours, the signal propagation delay in single-hop communication between users may generally be less than 20 ms, and the maximum satellite visual time may be 20 minutes. LEO has short signal propagation distance and less link loss, and does not require high transmission power of user terminals. The orbital height of GEO may be 35786 km, its rotation period around the earth may be 24 hours, and the signal propagation delay in single-hop communication between users may generally be 250 ms.

In order to ensure the coverage of satellites and improve the system capacity of the entire satellite communication system, satellites cover the ground with multiple beams, and a satellite may form dozens or even hundreds of beams to cover the ground. A satellite beam may cover the ground area with a diameter of tens to hundreds of kilometers.

It should be noted that FIG. 1 to FIG. 3 are only illustrative of the systems to which the present disclosure applies, and the methods illustrated in the embodiments of the present disclosure may also be applied to other systems. In addition, the terms "system" and "network" of the present disclosure are often used interchangeably herein. In the present disclosure, the term "and/or" is used to describe an association relationship of associated objects, and represents that there may be three relationships. For example, A and/or B may represent the following three situations: i.e., independent existence of A, existence of both A and B and independent existence of B. In addition, the character "/" in the present disclosure generally represents that an "or" relationship is formed between the previous and next associated objects. It should be understood that the reference to "indicate" in embodiments of the present disclosure may be a direct indication, may be an indirect indication, or may indicate an association relationship. For example, A indicates B, which may mean that A directly indicates B, for example, B may be obtained through A. It can also mean that A indirectly indicates B, for example, A indicates C, and B can be obtained by C. It can also indicate that there is an association relationship between A and B. It should be understood that "correspond" in the description of embodiments of the present disclosure may mean that there is a direct correspondence or an indirect correspondence relationship between the two, or may also mean that there is an association relationship between the two, or may also be a relationship between indication and being indicated, configuration and being configured, etc. It should also be understood that the "predefined" or "predefined rules" referred to in embodiments of the present disclosure may be implemented by pre-storing corresponding codes, tables, or other manners that may be used to indicate relevant information in devices (e.g., including terminal devices and network devices), the specific implementation of which is not limited by the present disclosure. For example, 'predefined' may refer to what is defined in the protocol. It should also be understood that, in embodiments of the present disclosure, the "protocol" may refer to standard protocols in the communication field, such as an LTE protocol, an NR protocol, and related protocols applied in future communication systems, which are not limited herein.

Satellites may be divided, based on functions provided thereof, into two types of satellites including transparent payload satellite and regenerative payload satellite. The transparent payload satellite only provides functions of radio frequency filtering, frequency conversion and amplification, and only transparently forwards signals without changing waveform signals forwarded. The regenerative payload satellite provides functions of radio frequency filtering, frequency conversion and amplification as well as demodulation/decoding, switch/routing, coding/modulation, and the regenerative payload satellite has some or all functions of the base station.

In the NTN, one or more Gateways may be included for communication between satellites and terminals.

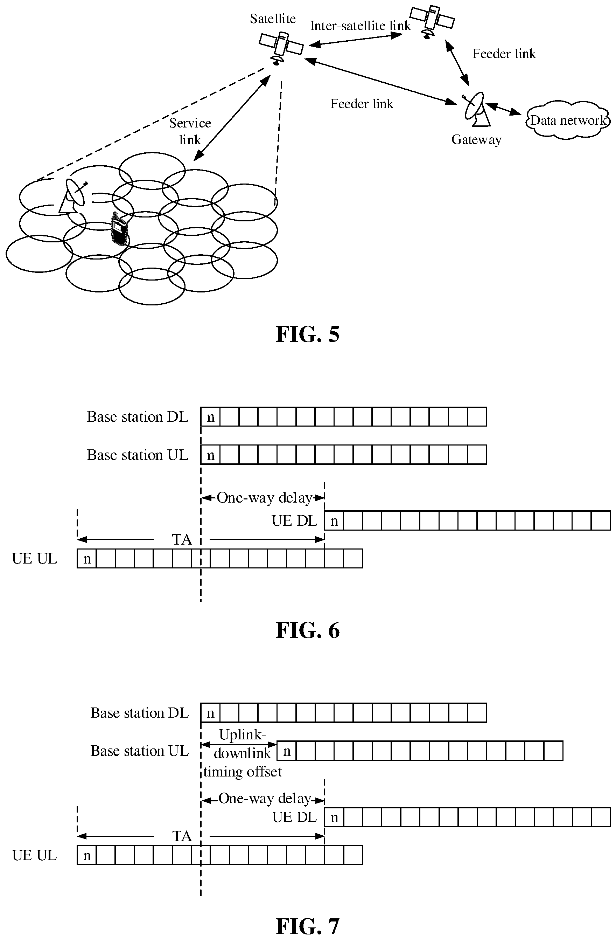

FIG. 4 and FIG. 5 are schematic diagrams of NTN scenarios based on a transparent payload satellite and a regenerative payload satellite respectively.

As illustrated in FIG. 4, for the NTN scenario based on the transparent payload satellite, one or more gateways communicate with the satellite through a feeder link, and the satellite may communicate with one or more terminals through a service link. As illustrated in FIG. 5, for the NTN scenario based on the regenerative payload satellite, the satellites communicate with each other through an Inter-satellite link, the one or more gateways communicate with the satellites through the feeder link, and the satellites communicate with the one or more terminals through the service link.

The timing relationship for IoT-NTN system is explained below.

In a terrestrial communication system, the propagation delay of signal communication is usually less than 1 ms. In the IoT-NTN system, due to the long communication distance between the terminal device and the satellite (or the network device), the propagation delay of signal communication is very large, which may range from tens of milliseconds to hundreds of milliseconds and is specifically related to the satellite orbit height and the service type of satellite communication. In order to deal with the large propagation delay, the timing relationship for IoT-NTN system needs to be enhanced relative to the IoT system (such as eMTC or NB-IoT).

In the IoT-NTN system, like the IoT system, UE needs to take into account the effect of Timing Advance (TA) when uplink transmission is performed. Because of the large propagation delay in the system, the range of TA value is also large. When the UE is scheduled to perform uplink transmission in the subframe n, the UE takes into account a round-trip propagation delay and transmits in advance during uplink transmission, so that the signal may be transmitted on the uplink subframe n on the network device side when reaching the network device side. Specifically, the timing relationships in the IoT-NTN system may include two cases as illustrated in FIG. 6 and FIG. 7 below respectively.

In the first case, as illustrated in FIG. 6, downlink subframes and uplink subframes on the network device side are aligned. When the UE is scheduled to perform uplink transmission, an offset value Koffset is required to be introduced, and the offset value Koffset corresponds to the TA of the UE. For example, a time length corresponding to the offset value Koffset is greater than or equal to a time length corresponding to the TA of the UE. In this case, the round-trip delay on the UE side is determined according to the TA of the UE.

In the second case, as illustrated in FIG. 7, there is an uplink-downlink timing offset value between uplink timing and downlink timing between the uplink subframes and the downlink subframes on the network device side. When the UE is scheduled to perform uplink transmission, an offset value Koffset is required to be introduced, and the offset value Koffset corresponds to the TA of the UE. For example, a time length corresponding to the offset value Koffset is greater than or equal to a time length corresponding to the TA of the UE. In this case, the round-trip delay on the UE side is determined according to the TA of the UE and the uplink-downlink timing offset value of the base station.

In order to facilitate the understanding of the solution of the present disclosure, the control channel monitoring manner in the NB-IoT system is described below.

A manner of monitoring a downlink control channel candidate between an uplink grant and an uplink shared channel is as follows.

Optionally, for a UE-specific search space, it is assumed that the terminal device is configured with two HARQ processes.

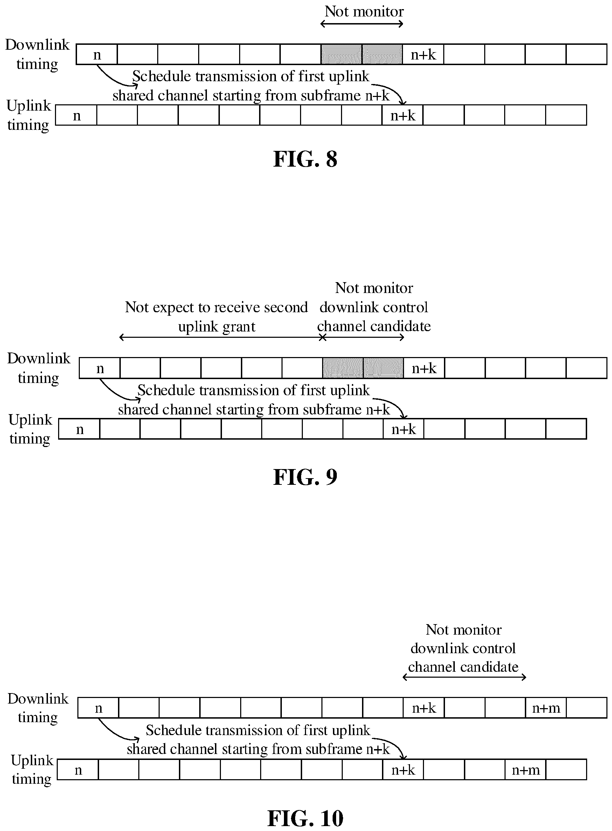

If the first downlink control channel carrying the first uplink grant (for example, corresponding to DCI format N0) received by the terminal device ends in subframe n, and if the transmission of the first uplink shared channel corresponding to the first uplink grant (for example, corresponding to NPUSCH format 1) starts from subframe n+k, then the terminal device is not required to monitor a downlink control channel candidate in any subframe from subframe n+k-2 to subframe n+k-1. FIG. 8 illustrates such an example.

The terminal device does not expect to receive a second downlink control channel carrying a second uplink grant (for example, corresponding to DCI format N0) before subframe n+k-2, where the transmission of the second uplink shared channel corresponding to the second uplink grant (e.g. corresponding to NPUSCH format 1) ends after subframe n+k+255. FIG. 9 illustrates such an example.

Optionally, for TDD, if the transmission of the first uplink shared channel corresponding to the first uplink grant (e.g. corresponding to NPUSCH format 1) ends in subframe n+m, the terminal device is not required to monitor the downlink control channel candidate in any subframe from subframe n+k and subframe n+m-1. FIG. 10 illustrates such an example.

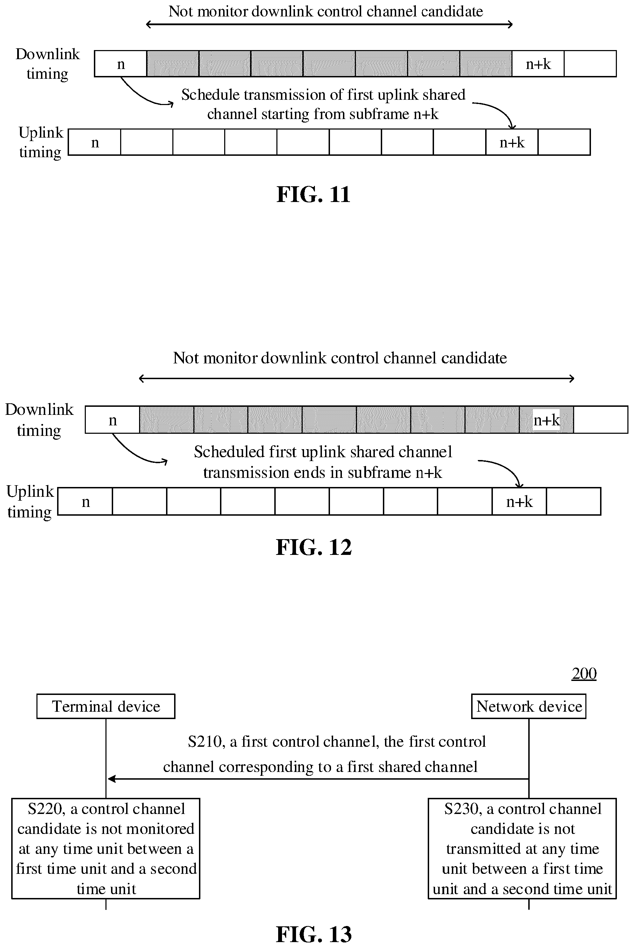

Otherwise, if the first downlink control channel carrying the first uplink grant (for example, corresponding to DCI format N0) received by the terminal device ends in subframe n, or the first downlink shared channel carrying random access response (RAR) grant in subframe n, and if the transmission of the first uplink shared channel corresponding to the first uplink grant or the RAR grant (e.g. corresponding to NPUSCH format 1) starts from subframe n+k, then the terminal device is not required to monitor the downlink control channel candidate in any subframe from subframe n+1 to subframe n+k-1. FIG. 11 illustrates such an example.

Optionally, for TDD, if the first downlink control channel carrying the first uplink grant (for example, corresponding to DCI format N0) received by the terminal device ends in subframe n, or the first downlink shared channel carrying random access response (RAR) grant received ends in subframe n, and if the transmission of the first uplink shared channel corresponding to the first uplink grant or the RAR grant (e.g. corresponding to NPUSCH format 1) ends in subframe n+k, then the terminal device is not required to monitor the downlink control channel candidate in any subframe from subframe n+1 to subframe n+k. FIG. 12 illustrates such an example.

In addition, the guard period will also have an effect on monitoring of downlink control channel candidate.

Optionally, it is assumed that the terminal device is configured with two HARQ processes.

If transmission of a first uplink channel (for example, uplink shared channel such as NPUSCH) by the terminal device ends in subframe n, for FDD, if Type B half-duplex guard periods are configured, then the terminal device is not required to receive transmissions within the Type B half-duplex guard periods.

Optionally, for guard period for half-duplex FDD operation, for a Type A half-duplex FDD operation, the terminal device will create a guard period, that is, the terminal device does not receive on the last part of the previous downlink subframe of its uplink subframe. For a Type B half-duplex FDD operation, the terminal device will create a plurality of guard periods, and each guard period is associated with a half-duplex guard subframe, that is, the terminal device does not receive in the previous downlink subframe of its uplink subframe, and the terminal device does not receive in the next downlink subframe of its uplink subframe.

For terminal devices in the Internet of Things NTN (IoT-NTN) system, they do not have the ability to use a GNSS module and transmit/receive in the IoT-NTN system simultaneously.

The GNSS module is used by terminal device to obtain synchronization information. For example, when the terminal device is in an idle state, if the terminal device receives a paging message or a Wake up signal (WUS), the terminal device needs to perform time-frequency synchronization after receiving the paging message or WUS; or the terminal device needs to perform time-frequency synchronization in advance in order to receive the paging message or WUS. In this process, the terminal device may need to initiate the GNSS module to fix the GNSS position, such as to complete the Time To First Fix (TTFF) of GNSS, and then switch from the GNSS module to an IoT-NTN system working module, and obtain the serving satellite ephemeris for uplink synchronization by obtaining Information Block (SIB) in NTN system. Normally, when a terminal device is hot started, a GNSS TTFF takes 1 second, that is, if the GNSS ephemeris corresponding to the last TTFF is obtained within 4 hours, then a GNSS TTFF takes 1 second. When the terminal device is warm started, a GNSS TTFF takes less than 5 seconds, that is, if the GNSS Almanac corresponding to the last TTFF is obtained within 180 days, a GNSS TTFF takes less than 5 seconds.

In addition, the terminal device may not have the ability to receive and transmit signals simultaneously.

In addition, as mentioned above, because of the large propagation delay in the NTN system, the range of TA value is also large.

Therefore, the uplink-downlink timing relationship in terrestrial network (TN) system is not suitable for the uplink-downlink timing relationship in the IoT-NTN system, which makes the terminal device in the IoT-NTN system unable to monitor the control channel effectively, and thus the power consumption of the terminal device is increased and the reliability of communication is reduced.

Basis on this, in the embodiments of the present disclosure, there is provided a wireless communication method, a terminal device and a network device, which, for an IoT-NTN system, not only ensures the normal operation of terminal devices that cannot receive and transmit signals simultaneously so as to improve reliability of communication, but also achieves an effect of power saving.

FIG. 13 is a schematic flowchart of a wireless communication method 200 according to an embodiment of the present disclosure, and the method 200 may be interactively executed by a terminal device and a network device. The terminal device illustrated in FIG. 13 may be the terminal device illustrated in FIG. 1 to FIG. 5. The network device illustrated in FIG. 13 may be the access network device illustrated in FIG. 1 to FIG. 5. It should be noted that FIG. 13 is only an example of the present disclosure and should not be construed as limiting the present disclosure. For example, in other optional embodiments, the wireless communication method provided by the present disclosure may also be applicable to sidelink communication, that is, in other optional embodiments, the wireless communication method provided by the present disclosure may be interactively executed by two terminal devices, for example, by a receiving terminal and a transmitting terminal. Specifically, the transmitting terminal may transmit a first control channel illustrated in FIG. 13 to the receiving terminal, or the first control channel is a sidelink control channel. The method of the present disclosure is described below with the terminal device and the network device performing the method 200 as an example.

As illustrated in FIG. 13, the method 200 may include some or all of the following operations.

At S210, a first control channel is received from the network device by the terminal device, the first control channel corresponding to a first shared channel.

At S220, a control channel candidate is not monitored by the terminal device at any time unit between a first time unit and a second time unit.

The first time unit is determined according to at least one of n, n+k and n+m, the second time unit is determined according to at least one of n, n+k and n+m; n denotes a time unit where the first control channel ends, n+k denotes a time unit where transmission of the first shared channel starts, and n+m denotes a time unit where the transmission of the first shared channel ends.

In other words, the end of the first control channel received by the terminal device is in time unit n, the start of transmission of the first shared channel corresponding to the first control channel is in time unit n+k, and the end of transmission of the first shared channel corresponding to the first control channel is in time unit n+m.

Based on the technical solution, in the IoT-NTN system, by specifying a time period (i.e. any time unit between the first time unit and the second time unit) in which the terminal device does not monitor the control channel candidate, the normal operation of terminal devices that cannot receive and transmit signals simultaneously can be ensured, and the power saving effect can also be achieved.

In some embodiments, the at least one of n, n+k and n+m is a time unit based on a downlink timing of the terminal device; the first time unit is determined based on the at least one of n, n+k and n+m and a first offset, or the first time unit is determined based on the at least one of n, n+k and n+m and a third offset. The first offset indicates an offset between an uplink timing and the downlink timing of the terminal device, and the third offset is greater than the first offset.

Optionally, the first offset is configured by the network device, or the first offset is determined according to configuration parameters of the network device.

Optionally, the first offset is a TA value of the terminal device.

Optionally, the third offset is configured by the network device, or the third offset is determined according to configuration parameters of the network device.

Optionally, the third offset indicates an enhanced offset for the uplink timing of the terminal device.

Optionally, for the transmission timing of transmission of an uplink shared channel, if an end position of an uplink grant received by the terminal device is in a downlink time unit n, the terminal device should start transmitting the uplink shared channel scheduled by the uplink grant in an uplink time unit corresponding to a downlink time unit n+K2+O₃, where K2 is the uplink timing of transmission of the uplink shared channel scheduled by the uplink grant in the TN network. In other words, the downlink time unit n+K2+O₃ corresponds to the same uplink time unit as the downlink time unit n+k. O₃ denotes the third offset.

In some embodiments, the time unit corresponds to an uplink timing, which includes that the time unit is determined based on the uplink timing.

In some embodiments, the time unit corresponds to the uplink timing, or the time unit is determined based on the uplink timing, which may be understood as the time unit including the effect of the TA. Optionally, the time unit corresponding to the uplink timing, or the time unit being determined based on the uplink timing may be replaced with the time unit including the effect of the TA.

In some embodiments, the time unit corresponds to a downlink timing, which includes that the time unit is determined based on the downlink timing.

In some embodiments, the time unit corresponds to the downlink timing, or the time unit is determined based on the downlink timing, which may be understood as the time unit assuming that the TA is 0, or without the effect of the TA. Optionally, the time unit corresponding to the downlink timing, or the time unit being determined based on the downlink timing may be replaced with the time unit assuming that the TA is 0 or without the effect of the TA.

Optionally, at least one of n, n+k and n+m is a time unit based on a downlink timing of the terminal device. The first time unit is determined based on at least one of the n, n+k and n+m and the first offset, or the first time unit is determined based on at least one of the n, n+k and n+m and the third offset. The first time unit corresponds to the downlink timing of the terminal device, or the first time unit is determined based on the downlink timing of the terminal device, or the first time unit is determined assuming that the TA is 0 or without the effect of TA.

In some embodiments, the at least one of n, n+k and n+m is a time unit based on an uplink timing of the terminal device, and the first time unit is determined based on the at least one of n, n+k and n+m.

Optionally, at least one of n, n+k or n+m is a time unit based on the uplink timing of the terminal device, and the first time unit is determined based on at least one of n, n+k or n+m. The at least one of n, n+k or n+m corresponds to the uplink timing of the terminal device, or the first time unit corresponds to an uplink time unit determined based on the uplink timing of the terminal device, or the first time unit is determined based on the uplink time unit determined by the uplink timing of the terminal device, or the first time unit includes the effect of TA.

In some embodiments, the at least one of n, n+k and n+m is a time unit based on a downlink timing of the terminal device, and the first time unit is determined based on the at least one of n, n+k and n+m and a second offset. The second offset is configured by a network device, or the second offset is determined according to configuration parameters of the network device.

Optionally, the second offset indicates an offset between an uplink timing and a downlink timing of the network device.

Optionally, the second offset indicates an offset between a downlink timing and an uplink timing of the network device.

Optionally, the second offset is 0 when a downlink timing of the network device is aligned with an uplink timing of the network device.

Optionally, at least one of n, n+k or n+m is a time unit based on a downlink timing of the terminal device. The first time unit is determined based on the second offset and at least one of the n, n+k or n+m. The first time unit corresponds to the downlink timing of the terminal device, or the first time unit is determined based on the downlink timing of the terminal device, or the first time unit is determined assuming that the TA is 0 or without the effect of TA.

In some embodiments, the at least one of n, n+k and n+m is a time unit based on a downlink timing of the terminal device, and the first time unit is determined based on the at least one of n, n+k and n+m.

Optionally, at least one of n, n+k and n+m is a time unit based on a downlink timing of the terminal device, and the first time unit is determined based on at least one of the n, n+k or n+m. The first time unit corresponds to the downlink timing of the terminal device, or the first time unit is determined based on the downlink timing of the terminal device, or the first time unit is determined assuming that the TA is 0 or without the effect of TA.

In some embodiments, at least one first downlink time unit that overlaps wholly or partially with a time unit determined based on the at least one of n, n+k and n+m is included in the downlink timing of the terminal device, the at least one first downlink time unit including the first time unit.

Optionally, the time unit determined based on at least one of n, n+k and n+m is a first uplink time unit.

Optionally, the at least one first downlink time unit includes a time unit at least partially overlapping the first uplink time unit.

Taking a time unit determined based on at least one of n, n+k and n+m being a first uplink time unit as an example, the first uplink time unit may correspond to two downlink time units, then the first time unit may correspond to a first one of the two downlink time units or a second one of the two downlink time units. That is, a time unit of start of not monitoring the control channel candidate may be the first one of the two downlink time units or the second one of the two downlink time units.

Optionally, the at least one first downlink time unit is a plurality of first downlink time units, and the first time unit is any one of the plurality of first downlink time units or an earliest first downlink time unit of the plurality of first downlink time units.

Optionally, the at least one first downlink time unit is two downlink time units, and the first time unit corresponds to the earlier one of the two downlink time units.

In some embodiments, the at least one of n, n+k and n+m is a time unit based on a downlink timing of the terminal device; the second time unit is determined based on the at least one of n, n+k and n+m and a first offset, or the second time unit is determined based on the at least one of n, n+k and n+m and a third offset; the first offset indicates an offset between an uplink timing and the downlink timing of the terminal device, and the third offset is greater than the first offset.

Optionally, the first offset is configured by the network device, or the first offset is determined according to configuration parameters of the network device.

Optionally, the first offset is the TA value of the terminal device.

Optionally, the third offset is configured by the network device, or the third offset is determined according to configuration parameters of the network device.

Optionally, the third offset indicates an enhanced offset for the uplink timing of the terminal device.

Optionally, for the transmission timing of transmission of an uplink shared channel, if an end position of an uplink grant received by the terminal device is in a downlink time unit n, the terminal device should start transmitting the uplink shared channel scheduled by the uplink grant in an uplink time unit corresponding to a downlink time unit n+K2+O₃, where K2 is the uplink timing of transmission of the uplink shared channel scheduled by the uplink grant in the TN network. In other words, the downlink time unit n+K2+O₃ corresponds to the same uplink time unit as the downlink time unit n+k. O₃ denotes the third offset.

Optionally, at least one of n, n+k and n+m is a time unit based on a downlink timing of the terminal device. The second time unit is determined based on at least one of the n, n+k and n+m and the first offset, or the second time unit is determined based on at least one of the n, n+k and n+m and the third offset. The second time unit corresponds to the downlink timing of the terminal device, or the second time unit is determined based on the downlink timing of the terminal device, or the second time unit is determined assuming that the TA is 0 or without the effect of TA.

In some embodiments, the at least one of n, n+k and n+m is a time unit based on an uplink timing of the terminal device, and the second time unit is determined based on the at least one of n, n+k and n+m.

Optionally, at least one of n, n+k or n+m is a time unit based on the uplink timing of the terminal device, and the second time unit is determined based on at least one of n, n+k or n+m. The at least one of n, n+k or n+m corresponds to the uplink timing of the terminal device, or the second time unit corresponds to an uplink time unit determined based on the uplink timing of the terminal device, or the second time unit is determined based on the uplink time unit determined by the uplink timing of the terminal device, or the second time unit includes the effect of TA.

In some embodiments, the at least one of n, n+k and n+m is a time unit based on a downlink timing of the terminal device, and the second time unit is determined based on the at least one of n, n+k and n+m and a second offset, the second offset being configured by a network device, or the second offset being determined according to configuration parameters of the network device.

Optionally, the second offset indicates an offset between an uplink timing and a downlink timing of the network device.

Optionally, the second offset indicates an offset between a downlink timing and an uplink timing of the network device.

Optionally, the second offset is 0 when a downlink timing of the network device is aligned with an uplink timing of the network device.

Optionally, at least one of n, n+k and n+m is a time unit based on a downlink timing of the terminal device. The second time unit is determined based on at least one of the n, n+k and n+m and the second offset. The second time unit corresponds to the downlink timing of the terminal device, or the second time unit is determined based on the downlink timing of the terminal device, or the second time unit is determined assuming that the TA is 0 or without the effect of TA.

In some embodiments, the at least one of n, n+k and n+m is a time unit based on a downlink timing of the terminal device, and the second time unit is determined based on the at least one of n, n+k and n+m.

Optionally, at least one of n, n+k and n+m is a time unit based on a downlink timing of the terminal device, and the second time unit is determined based on at least one of the n, n+k and n+m. The second time unit corresponds to the downlink timing of the terminal device, or the second time unit is determined based on the downlink timing of the terminal device, or the second time unit is determined assuming that the TA is 0 or without the effect of TA.

In some embodiments, at least one second downlink time unit that overlaps wholly or partially with a time unit determined based on the at least one of n, n+k or n+m is included in a downlink timing of the terminal device, the at least one second downlink time unit including the second time unit.

Optionally, the time unit determined based on at least one of n, n+k and n+m is a second uplink time unit.

Optionally, the at least one second downlink time unit includes a time unit at least partially overlapping the second uplink time unit.

Taking a time unit determined based on at least one of n, n+k and n+m being a second uplink time unit as an example, the second uplink time unit may correspond to two downlink time units, then the second time unit may correspond to a first one of the two downlink time units or a second one of the two downlink time units. That is, a time unit of end of not monitoring the control channel candidate may be the first one of the two downlink time units or the second one of the two downlink time units.

Optionally, the at least one second downlink time unit is a plurality of second downlink time units, and the second time unit is any one of the plurality of second downlink time units or a latest second downlink time unit of the plurality of second downlink time units.

Optionally, the at least one second downlink time unit is two downlink time units, and the second time unit corresponds to the later one of the two downlink time units.

In some embodiments, the first time unit is determined according to n+k.

Optionally, the first time unit is determined according to n+k in a case that two or more hybrid automatic repeat request (HARQ) processes are configured in a first device.

In some embodiments, the first time unit is determined according to n.

Optionally, the first time unit is determined according to n in a case that one HARQ process is configured in a first device.

In some embodiments, the second time unit is determined according to n+k.

Optionally, the second time unit is determined according to n+k in a frequency division duplex (FDD) scenario.

In some embodiments, the second time unit is determined according to n+m.

Optionally, the second time unit is determined according to n+m in a time division duplex (TDD) scenario.

In some embodiments, in a case that two or more HARQ processes are configured in a first device and in an FDD scenario, the first time unit is at least one of: n+k-2, n+k-2-O₁ and n+k-2-O₃; where O₁ denotes a first offset, O₃ denotes a third offset, the first offset indicates an offset between an uplink timing and a downlink timing of the terminal device, and the third offset is greater than the first offset.

In some embodiments, in a case where two or more HARQ processes are configured in a first device and in an FDD scenario, the second time unit is at least one of: n+k-1, n+k-1+O₂, n+k and n+k+O₂; where O₂ denotes a second offset, and the second offset is configured by a network device.

In some embodiments, in a case where two or more HARQ processes are configured in a first device and in a TDD scenario, the first time unit is at least one of: n+k, n+k-O₁ and n+k-O₃; where O₁ denotes a first offset, O₃ denotes a third offset, the first offset indicates an offset between an uplink timing and a downlink timing of the terminal device, and the third offset is greater than the first offset.

In some embodiments, in a case where two or more HARQ processes are configured in a first device and in an FDD scenario, the second time unit is at least one of: n+m-1, n+m-1+O₂, n+m and n+m+O₂; where O₂ denotes a second offset, and the second offset is configured by a network device.

In some embodiments, in a case that one HARQ process is configured in a first device and in an FDD scenario, the first time unit is at least one of: n+1, n+1-O₁ and n+1-O₃; where O₁ denotes a first offset, O₃ denotes a third offset, the first offset indicates an offset between an uplink timing and a downlink timing of the terminal device, and the third offset is greater than the first offset.

In some embodiments, in a case that one HARQ process is configured in a first device and in an FDD scenario, the second time unit is at least one of: n+k-1, n+k-1+O₂, n+k and n+k+O₂; where O₂ denotes a second offset, and the second offset is configured by a network device.

In some embodiments, in a case that one HARQ process is configured in a first device and in a TDD scenario, the first time unit is at least one of: n+1, n+1-O₁ and n+1-O₃; where O₁ denotes a first offset, O₃ denotes a third offset, the first offset indicates an offset between an uplink timing and a downlink timing of the terminal device, and the third offset is greater than the first offset.

In some embodiments, in a case that one HARQ process is configured in a first device and in a TDD scenario, the second time unit is at least one of: n+m-1, n+m-1+O₂, n+m and n+m+O₂; where O₂ denotes a second offset, and the second offset is configured by a network device.

In some embodiments, in a case that two or more HARQ processes are configured in a first device, a time unit(s) before the first time unit is not used for monitoring of a second control channel for scheduling a second shared channel; where transmission of the second shared channel ends after a third time unit, and a length of time between the third time unit and the first time unit is a first preset value.

Optionally, the first preset value is P+2.

Optionally, P is 255, or P is an integer less than 255.

In some embodiments, the method 200 further includes the following operation.

The terminal device receives configuration information for determining at least one of a first offset, a second offset and a third offset, where the first time unit is determined according to at least one of n, n+k and n+m and at least one of the first offset, the second offset and the third offset, and the second time unit is determined according to at least one of n, n+k and n+m and at least one of the first offset, the second offset and the third offset.

Optionally, the configuration information is carried in at least one of:
a system message, a Radio Resource Control (RRC), a Media Access Control (MAC) Control Element (CE), and a Downlink Control Information (DCI).

Optionally, the unit of the first offset value may be a unit of a time unit, for example, a subframe, a slot, a symbol, a frame, etc.. Optionally, the unit of the first offset value may be an absolute value, such as milliseconds, microseconds, seconds, etc.

Optionally, the unit of the second offset value may be a unit of a time unit, for example, a subframe, a slot, a symbol, a frame, etc.. Optionally, the unit of the first offset value may be an absolute value, such as milliseconds, microseconds, seconds, etc.

Optionally, the unit of the third offset value may be a unit of a time unit, for example, a subframe, a slot, a symbol, a frame, etc.. Optionally, the unit of the first offset value may be an absolute value, such as milliseconds, microseconds, seconds, etc.

The method 200 is described below in connection with specific embodiments.

### First embodiment:

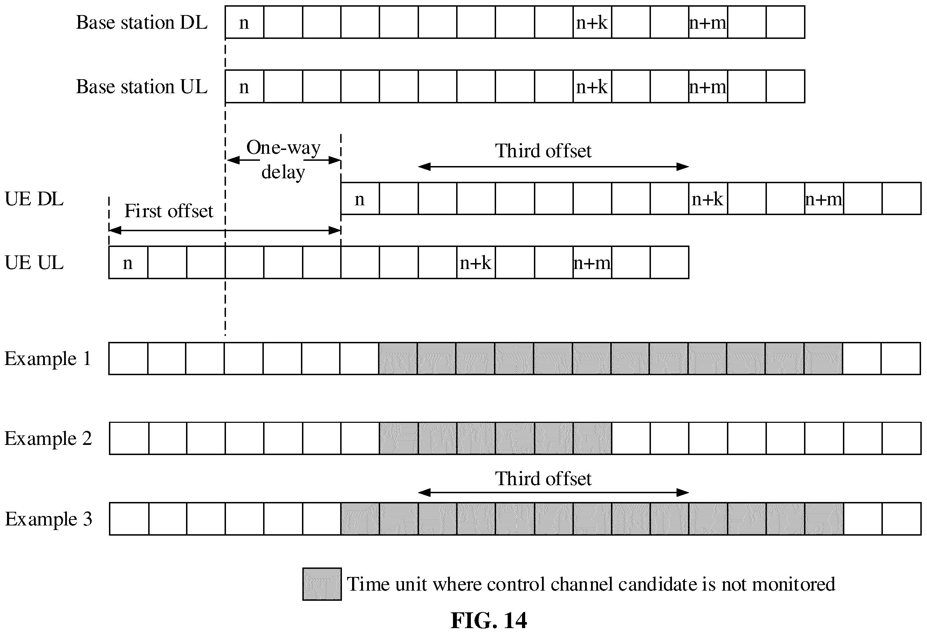

FIG. 14 is an example of a first time unit and a second time unit provided by an embodiment of the present disclosure.

As illustrated in example 1 of FIG. 14, at least one of the n, n+k and n+m is a time unit based on the uplink timing of the terminal device, and the first time unit is the time unit n+k-2. As illustrated in example 2 of FIG. 14, at least one of the n, n+k and n+m is a time unit based on the downlink timing of the terminal device, and the first time unit may be the time unit n+k-O₁-2. As illustrated in example 3 of FIG. 14, at least one of the n, n+k and n+m is a time unit based on the downlink timing of the terminal device, and the first time unit may be the time unit n+k-O₃-2.

As illustrated in example 1 or example 3 of FIG. 14, at least one of the n, n+k and n+m is a time unit based on the downlink timing of the terminal device, and the second time unit is the time unit n+m. As illustrated in example 2 of FIG. 14, at least one of the n, n+k and n+m is a time unit based on the uplink timing of the terminal device, and the second time unit is a time unit n+m; or at least one of the n, n+k and n+m is a time unit based on the downlink timing of the terminal device, and the second time unit is the time unit n+m-O₁.

It should be understood that in the embodiment, as an example, O₁ is 6 time units and O₃ is 7 time units, but the present disclosure is not limited thereto.

### Second embodiment:

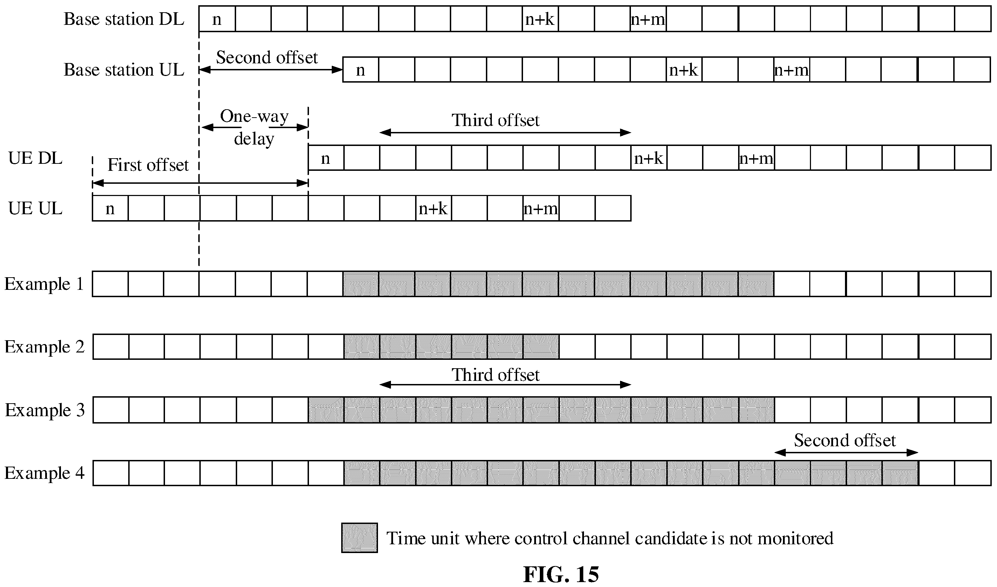

FIG. 15 is an example of a first time unit and a second time unit provided by an embodiment of the present disclosure.

As illustrated in example 1, example 2 and example 4 of FIG. 14, at least one of the n, n+k and n+m is a time unit based on the uplink timing of the terminal device, and the first time unit is a time unit n+k-2; or at least one of the n, n+k and n+m is a time unit based on the downlink timing of the terminal device, and the first time unit is the time unit n+k-O₁-2. As illustrated in example 3 of FIG. 14, at least one of the n, n+k and n+m is a time unit based on the downlink timing of the terminal device, and the first time unit is the time unit n+k-O₃-2.

As illustrated in example 1 and example 3 of FIG. 14, at least one of the n, n+k and n+m is a time unit based on the downlink timing of the terminal device, and the second time unit is the time unit n+m. As illustrated in example 2 of FIG. 14, at least one of the n, n+k and n+m is a time unit based on the uplink timing of the terminal device, and the second time unit is a time unit n+m; or at least one of the n, n+k and n+m is a time unit based on the downlink timing of the terminal device, and the second time unit is the time unit n+m-O₁. As illustrated in example 4 of FIG. 14, at least one of the n, n+k and n+m is a time unit based on the uplink timing of the terminal device, and the second time unit is the time unit n+m+O₂.

It should be understood that in the embodiment, as an example, O₁ is 6 time units, O₃ is 7 time units and O₂ is 4 time units, but the present disclosure is not limited thereto.

The wireless communication method according to the embodiment of the present disclosure has been described in detail from the perspective of a terminal device with reference to FIG. 13 to FIG. 15. The wireless communication method provided in the present disclosure will be described from the perspective of a network device with reference to FIG. 13.

As illustrated in FIG. 13, the method 200 may include some or all of the following operations.

At S210, a first control channel is transmitted to a terminal device by a network device, the first control channel corresponding to a first shared channel.

At S230, a control channel candidate is not transmitted by the network device at any time unit between a first time unit and a second time unit.

The first time unit is determined according to at least one of n, n+k and n+m, the second time unit is determined according to at least one of n, n+k and n+m; n denotes a time unit where the first control channel ends, n+k denotes a time unit where f transmission of the first shared channel starts, and n+m denotes a time unit where the transmission of the first shared channel ends.

In some embodiments, the first time unit is determined according to n+k.

Optionally, the first time unit is determined according to n+k in a case that two or more HARQ processes are configured in a first device.

In some embodiments, the first time unit is determined according to n.

Optionally, the first time unit is determined according to n in a case that one HARQ process is configured in a first device.

In some embodiments, the second time unit is determined according to n+k.

Optionally, the second time unit is determined according to n+k in an FDD scenario.

In some embodiments, the second time unit is determined according to n+m.

Optionally, the second time unit is determined according to n+m in a TDD scenario.

In some embodiments, the method 200 further includes the following operations.

The network device transmits configuration information for determining at least one of a first offset, a second offset and a third offset, where the first time unit is determined according to at least one of n, n+k and n+m and at least one of the first offset, the second offset and the third offset, and the second time unit is determined according to at least one of n, n+k and n+m and at least one of the first offset, the second offset and the third offset.

It should be understood that for the interaction operations in method 200, reference may be made by the network device side to the corresponding operations on the terminal device side, which will not be repeated here for the sake of brevity.

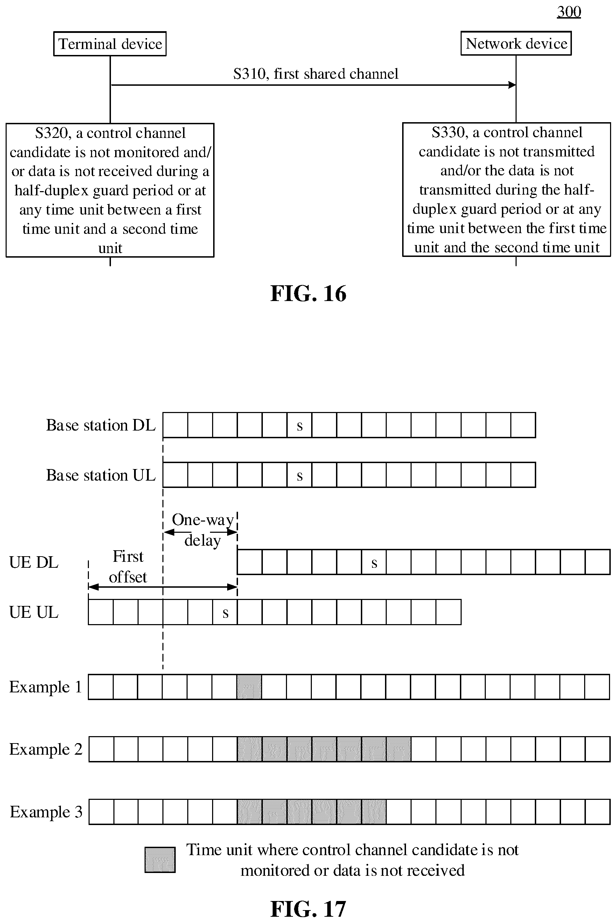

FIG. 16 is a schematic flowchart of a wireless communication method 300 according to an embodiment of the present disclosure, and the method 300 may be interactively executed by a terminal device and a network device. The terminal device illustrated in FIG. 16 may be the terminal device illustrated in FIG. 1 to FIG. 5. The network device illustrated in FIG. 16 may be the access network device illustrated in FIG. 1 to FIG. 5. It should be noted that FIG. 16 is only an example of the present disclosure and should not be construed as limiting the present disclosure. For example, in other optional embodiments, the wireless communication method provided by the present disclosure may also be applicable to sidelink communication, that is, in other optional embodiments, the wireless communication method provided by the present disclosure may be interactively executed by two terminal devices, for example, by a receiving terminal and a transmitting terminal. Specifically, the transmitting terminal may transmit a first control channel illustrated in FIG. 16 to the receiving terminal, or the first control channel is a sidelink control channel. The method of the present disclosure is described below with the terminal device and the network device performing the method 300 as an example.

As illustrated in FIG. 16, the method 300 may include some or all of the following operations.

At S310, a first shared channel is transmitted to the network device by the terminal device.

At S320, a control channel candidate is not monitored and/or data is not received by the terminal device during a half-duplex guard period or at any time unit between a first time unit and a second time unit. The first time unit is determined according to s, the second time unit is determined according to s, and s denotes a time unit where transmission of the first shared channel ends.

In some embodiments, the terminal device is in an FDD scenario; and/or, the half-duplex guard period includes a configured Type B half-duplex guard period.

In some embodiments, the s is a time unit based on a downlink timing of the terminal device; the first time unit is determined based on the s and a first offset, or the first time unit is determined based on the s and a third offset; the first offset indicates an offset between an uplink timing and the downlink timing of the terminal device, and the third offset is greater than the first offset.

Optionally, the first offset is configured by the network device, or the first offset is determined according to configuration parameters of the network device.

Optionally, the first offset is the TA value of the terminal device.

Optionally, the third offset is configured by the network device, or the third offset is determined according to configuration parameters of the network device.

Optionally, the third offset indicates an enhanced offset for the uplink timing of the terminal device.

Optionally, for the transmission timing of transmission of an uplink shared channel, if an end position of the uplink grant received by the terminal device is in a downlink time unit n, the terminal device should start transmitting the uplink shared channel scheduled by the uplink grant in an the uplink time unit corresponding to a downlink time unit n+K2+O₃, where K2 is the uplink timing of transmission of the uplink shared channel scheduled by the uplink grant in the TN network. In other words, the downlink time unit n+K2+O₃ corresponds to the same uplink time unit as the downlink time unit n+k. O₃ denotes the third offset.

In some embodiments, the time unit corresponds to an uplink timing, which includes that the time unit is determined based on the uplink timing.

In some embodiments, the time unit corresponds to the uplink timing, or the time unit is determined based on the uplink timing, which may be understood as the time unit including the effect of the TA. Optionally, the time unit corresponding to the uplink timing, or the time unit being determined based on the uplink timing may be replaced with the time unit including the effect of the TA.

In some embodiments, the time unit corresponds to a downlink timing, which includes that the time unit is determined based on the downlink timing.

In some embodiments, the time unit corresponds to the downlink timing, or the time unit is determined based on the downlink timing, which may be understood as the time unit assuming that the TA is 0, or without the effect of the TA. Optionally, the time unit corresponding to the downlink timing, or the time unit being determined based on the downlink timing may be replaced with the time unit assuming that the TA is 0 or without the effect of the TA.

Optionally, the s is a time unit based on a downlink timing of the terminal device. The first time unit is determined based on the s and the first offset, or the first time unit is determined based on the s and the third offset. The first time unit corresponds to the downlink timing of the terminal device, or the first time unit is determined based on the downlink timing of the terminal device, or the first time unit is determined assuming that the TA is 0 or without the effect of TA.

In some embodiments, the s is a time unit based on an uplink timing of the terminal device, and the first time unit is determined based on the s.

Optionally, the s is a time unit based on the uplink timing of the terminal device, and the first time unit is determined based on the s. The s corresponds to the uplink timing of the terminal device, or the first time unit corresponds to an uplink time unit determined based on the uplink timing of the terminal device, or the first time unit is determined based on the uplink time unit determined by the uplink timing of the terminal device, or the first time unit includes the effect of TA.

In some embodiments, the s is a time unit based on a downlink timing of the terminal device, and the first time unit is determined based on the s and a second offset. The second offset is configured by a network device, or the second offset is determined according to configuration parameters of the network device.

Optionally, the second offset indicates an offset between an uplink timing and a downlink timing of the network device.

Optionally, the second offset indicates an offset between a downlink timing and an uplink timing of the network device.

Optionally, the second offset is 0 when a downlink timing of the network device is aligned with an uplink timing of the network device.

Optionally, the s is a time unit based on a downlink timing of the terminal device. The first time unit is determined based on the s and the second offset. The first time unit corresponds to the downlink timing of the terminal device, or the first time unit is determined based on the downlink timing of the terminal device, or the first time unit is determined assuming that the TA is 0 or without the effect of TA.

In some embodiments, the s is a time unit based on a downlink timing of the terminal device, and the first time unit is determined based on the s.

Optionally, the s is a time unit based on a downlink timing of the terminal device, and the first time unit is determined based on the s. The first time unit corresponds to the downlink timing of the terminal device, or the first time unit is determined based on the downlink timing of the terminal device, or the first time unit is determined assuming that the TA is 0 or without the effect of TA.

In some embodiments, at least one first downlink time unit that overlaps wholly or partially with a time unit determined based on the s is included in the downlink timing of the terminal device, the at least one first downlink time unit including the first time unit.

Optionally, the time unit determined based on the s is a first uplink time unit.

Optionally, the at least one first downlink time unit includes a time unit at least partially overlapping the first uplink time unit.

Taking a time unit determined based on the s being a first uplink time unit as an example, the first uplink time unit may correspond to two downlink time units, then the first time unit may correspond to a first one of the two downlink time units or a second one of the two downlink time units. That is, a time unit of start of not monitoring the control channel candidate may be the first one of the two downlink time units or the second one of the two downlink time units.

Optionally, the at least one first downlink time unit is a plurality of first downlink time units, and the first time unit is any one of the plurality of first downlink time units or an earliest first downlink time unit of the plurality of first downlink time units.

Optionally, the at least one first downlink time unit is two downlink time units, and the first time unit corresponds to the earlier one of the two downlink time units.

In some embodiments, the s is a time unit based on a downlink timing of the terminal device; the second time unit is determined based on the s and a first offset, or the second time unit is determined based on the s and a third offset; the first offset indicates an offset between an uplink timing and the downlink timing of the terminal device, and the third offset is greater than the first offset.

Optionally, the first offset is configured by the network device, or the first offset is determined according to configuration parameters of the network device.

Optionally, the first offset is the TA value of the terminal device.

Optionally, the third offset is configured by the network device, or the third offset is determined according to configuration parameters of the network device.

Optionally, the third offset indicates an enhanced offset for the uplink timing of the terminal device.

Optionally, for the transmission timing of transmission of an uplink shared channel, if an end position of an uplink grant received by the terminal device is in a downlink time unit n, the terminal device should start transmitting the uplink shared channel scheduled by the uplink grant in an uplink time unit corresponding to a downlink time unit n+K2+O₃, where K2 is the uplink timing of transmission of the uplink shared channel scheduled by the uplink grant in the TN network. In other words, the downlink time unit n+K2+O₃ corresponds to the same uplink time unit as the downlink time unit n+k. O₃ denotes the third offset.

Optionally, the s is a time unit based on a downlink timing of the terminal device. The second time unit is determined based on the s and the first offset, or the second time unit is determined based on the s and the third offset. The second time unit corresponds to the downlink timing of the terminal device, or the second time unit is determined based on the downlink timing of the terminal device, or the second time unit is determined assuming that the TA is 0 or without the effect of TA.

In some embodiments, the s is a time unit based on an uplink timing of the terminal device, and the second time unit is determined based on the s.

Optionally, the s is a time unit based on the uplink timing of the terminal device, and the second time unit is determined based on the s. The s corresponds to the uplink timing of the terminal device, or the second time unit corresponds to an uplink time unit determined based on the uplink timing of the terminal device, or the second time unit is determined based on the uplink time unit determined by the uplink timing of the terminal device, or the second time unit includes the effect of TA.

In some embodiments, the s is a time unit based on a downlink timing of the terminal device, and the second time unit is determined based on the s and a second offset, the second offset being configured by a network device, or the second offset being determined according to configuration parameters of the network device.

Optionally, the second offset indicates an offset between an uplink timing and a downlink timing of the network device.

Optionally, the second offset indicates an offset between a downlink timing and an uplink timing of the network device.

Optionally, the second offset is 0 when a downlink timing of the network device is aligned with an uplink timing of the network device.

Optionally, the s is a time unit based on a downlink timing of the terminal device. The second time unit is determined based on the s and the second offset. The second time unit corresponds to the downlink timing of the terminal device, or the second time unit is determined based on the downlink timing of the terminal device, or the second time unit is determined assuming that the TA is 0 or without the effect of TA.

In some embodiments, the s is a time unit based on a downlink timing of the terminal device, and the second time unit is determined based on the s.

Optionally, the s is a time unit based on a downlink timing of the terminal device, and the second time unit is determined based on the s. The second time unit corresponds to the downlink timing of the terminal device, or the second time unit is determined based on the downlink timing of the terminal device, or the second time unit is determined assuming that the TA is 0 or without the effect of TA.

In some embodiments, at least one second downlink time unit that overlaps wholly or partially with a time unit determined based on the s is included in the downlink timing of the terminal device includes, the at least one second downlink time unit including the second time unit.

Optionally, the time unit determined based on the s is a second uplink time unit.

Optionally, the at least one second downlink time unit includes a time unit at least partially overlapping the second uplink time unit.

Taking a time unit determined based on the s being a second uplink time unit as an example, the second uplink time unit may correspond to two downlink time units, then the second time unit may correspond to a first one of the two downlink time units or a second one of the two downlink time units. That is, a time unit of end of monitoring the control channel candidate may be the first one of the two downlink time units or the second one of the two downlink time units.

Optionally, the at least one second downlink time unit is a plurality of second downlink time units, and the second time unit is any one of the plurality of second downlink time units or a latest second downlink time unit of the plurality of second downlink time units.

Optionally, the at least one second downlink time unit is two downlink time units, and the second time unit corresponds to the later one of the two downlink time units.

In some embodiments, the first time unit is at least one of: s+1, s+1-O₁ and s+1-O₃; where O₁ denotes a first offset, O₃ denotes a third offset, the first offset indicates an offset between an uplink timing and a downlink timing of the terminal device, and the third offset is greater than the first offset.

In some embodiments, the second time unit is at least one of: s, s+1, s+O₂ and s+1+O₂; where O₂ denotes a second offset, and the second offset is configured by a network device.

In some embodiments, the method 300 further includes the following operations.

Configuration information is received by the terminal device, the configuration information is used for determining at least one of a first offset, a second offset and a third offset, where the first time unit is determined according to s and at least one of the first offset, the second offset and the third offset, and the second time unit is determined according to s and at least one of the first offset, the second offset and the third offset.

### Third embodiment:

FIG. 17 is an example of a first time unit and a second time unit provided by an embodiment of the present disclosure.

As illustrated in example 1 to example 4 of FIG. 17, the s is a time unit based on the uplink timing of the terminal device, and the first time unit is the time unit s+1. As illustrated in example 2 of FIG. 17, the s is a time unit based on the uplink timing of the terminal device, and the second time unit is the time unit s+1. As illustrated in example 3 of FIG. 17, the s is a time unit based on the downlink timing of the terminal device, and the second time unit is the time unit s+1. As illustrated in example 4 of FIG. 17, the s is a time unit based on the downlink timing of the terminal device, and the second time unit is the time unit s.

It should be understood that in the embodiment, as an example, O₁ is 6 time units, but the present disclosure is not limited thereto.

### Fourth embodiment:

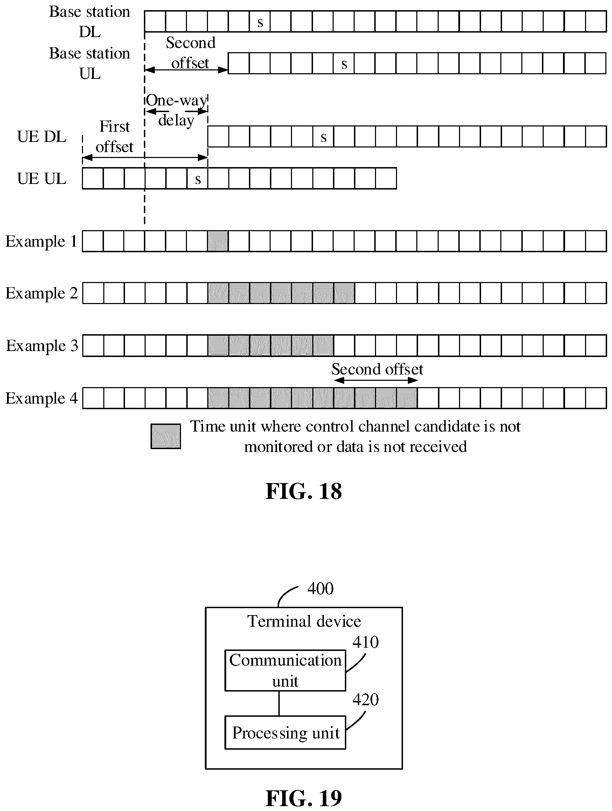

FIG. 18 is another example of a first time unit and a second time unit provided by an embodiment of the present disclosure.

As illustrated in example 1 to example 4 of FIG. 18, the s is a time unit based on the uplink timing of the terminal device, and the first time unit is the time unit s+1. As illustrated in example 2 of FIG. 18, the s is a time unit based on the downlink timing of the terminal device, and the second time unit is the time unit s+1. As illustrated in example 3 of FIG. 18, the s is a time unit based on the downlink timing of the terminal device, and the second time unit is the time unit s. As illustrated in example 4 of FIG. 18, the s is a time unit based on the downlink timing of the terminal device, and the second time unit is the time unit s+O₂.

It should be understood that in the embodiment, as an example, O₁ is 6 time units and O₂ is 4 time units, but the present disclosure is not limited thereto.

The wireless communication method according to the embodiment of the present disclosure has been described in detail from the perspective of a terminal device with reference to FIG. 16 to FIG. 18. The wireless communication method provided in the present disclosure will be described from the perspective of a network device with reference to FIG. 18.

As illustrated in FIG. 18, the method 300 may include some or all of the following operations.

At S310, a first shared channel is received from a terminal device by a network device.

At S330, a control channel candidate is not transmitted and/or data is not transmitted by the network device during a half-duplex guard period or at any time unit between a first time unit and a second time unit. The first time unit is determined according to s, the second time unit is determined according to s, and s denotes a time unit where transmission of the first shared channel ends.

In some embodiments, the terminal device is in an FDD scenario; and/or, the half-duplex guard period includes a configured Type B half-duplex guard period.

In some embodiments, the method 300 further includes the following operation.

Configuration information is transmitted by the network device, the configuration information is used for determining at least one of a first offset, a second offset and a third offset, where the first time unit is determined according to s and at least one of the first offset, the second offset and the third offset, and the second time unit is determined according to s and at least one of the first offset, the second offset and the third offset.

It should be understood that for the interaction operations in method 300, reference may be made by the network device side to the corresponding operations on the terminal device side, which will not be repeated here for the sake of brevity.

Preferred embodiments of the present disclosure have been described in detail with reference to the accompanying drawings, but the present disclosure is not limited to the specific details of the above embodiments. Within the scope of the technical conception of the present disclosure, various simple modifications may be made to the technical solution of the present disclosure, and these simple modifications all belong to the scope of protection of the present disclosure. For example, each of the specific technical features described in the above specific embodiments may be combined in any suitable manner without contradiction, and various possible combinations are not further described in the present disclosure in order to avoid unnecessary repetition. For another example, any combination may be made between the various embodiments of the present disclosure so long as it does not depart from the idea of the present disclosure and is likewise to be regarded as the disclosure of the present disclosure.

It should be understood that in various method embodiments of the present disclosure, the size of the sequence number of the above-mentioned processes does not mean the order of execution, and the execution order of each process should be determined by its function and inherent logic, and should not be limited in any way to the implementation process of the embodiments of the present disclosure. Further, in embodiments of the present disclosure, the terms "downlink" and "uplink" are used to indicate a transmission direction of the signals or data, where "downlink" is used to indicate that the transmission direction of the signals or data is a first direction transmitted from the station to the user equipment within the cell, and "uplink" is used to indicates the transmission direction of the signals or data is a second direction transmitted from the user equipment within the cell to the station. For example, "downlink signal" means that the transmission direction of the signals is the first direction. In addition, in the present disclosure, the term "and/or" is used to describe an association relationship of associated objects, and represents that there may be three relationships. Specifically, A and/or B may represent the following three situations: i.e., independent existence of A, existence of both A and B and independent existence of B. In addition, the character "/" in the present disclosure generally represents that an "or" relationship is formed between the previous and next associated objects.

The method embodiments of the present disclosure have been described in detail above with reference to FIG. 1 to FIG. 18, and the apparatus embodiments of the present disclosure will be described in detail below with reference to FIG. 19 to FIG. 22.

FIG. 19 is a schematic block diagram of a terminal device 400 according to a non-claimed embodiment of the present disclosure.

The terminal device 400 illustrated in FIG. 19 may correspond to a respective subject in the method 200 for performing the embodiments of the present disclosure, and the aforementioned and other operations and/or functions of various units in the terminal device 400 are designed to implement the respective flows in various methods in FIG. 13, respectively. As illustrated in FIG. 19, the terminal device 400 may include a communication unit 410 and a processing unit 420.

The communication unit 410 is configured to receive a first control channel, the first control channel corresponding to a first shared channel.

The processing unit 420 is configured to not monitor a control channel candidate at any time unit between a first time unit and a second time unit.

The first time unit is determined according to at least one of n, n+k and n+m, the second time unit is determined according to at least one of n, n+k and n+m; n denotes a time unit where the first control channel ends, n+k denotes a time unit where transmission of the first shared channel starts, and n+m denotes a time unit where the transmission of the first shared channel ends.

In some embodiments, the at least one of n, n+k and n+m is a time unit based on a downlink timing of the terminal device; the first time unit is determined based on the at least one of n, n+k and n+m and a first offset, or the first time unit is determined based on the at least one of n, n+k and n+m and a third offset. The first offset indicates an offset between an uplink timing and the downlink timing of the terminal device, and the third offset is greater than the first offset.

In some embodiments, the at least one of n, n+k and n+m is a time unit based on an uplink timing of the terminal device, and the first time unit is determined based on the at least one of n, n+k and n+m.

In some embodiments, the at least one of n, n+k and n+m is a time unit based on a downlink timing of the terminal device, and the first time unit is determined based on the at least one of n, n+k and n+m and a second offset, the second offset being configured by a network device.

In some embodiments, the at least one of n, n+k and n+m is a time unit based on a downlink timing of the terminal device, and the first time unit is determined based on the at least one of n, n+k and n+m.

In some embodiments, a downlink timing of the terminal device includes at least one first downlink time unit that overlaps wholly or partially with a time unit determined based on the at least one of n, n+k or n+m, the at least one first downlink time unit including the first time unit.

In some embodiments, the at least one first downlink time unit is a plurality of first downlink time units, and the first time unit is any one of the plurality of first downlink time units or an earliest first downlink time unit of the plurality of first downlink time units.

In some embodiments, the at least one of n, n+k and n+m is a time unit based on a downlink timing of the terminal device; the second time unit is determined based on the at least one of n, n+k and n+m and a first offset, or the second time unit is determined based on the at least one of n, n+k and n+m and a third offset; the first offset indicates an offset between an uplink timing and the downlink timing of the terminal device, and the third offset is greater than the first offset.

In some embodiments, the at least one of n, n+k and n+m is a time unit based on an uplink timing of the terminal device, and the second time unit is determined based on the at least one of n, n+k and n+m.

In some embodiments, the at least one of n, n+k and n+m is a time unit based on a downlink timing of the terminal device, and the second time unit is determined based on the at least one of n, n+k and n+m and a second offset, the second offset being configured by a network device.

In some embodiments, the at least one of n, n+k and n+m is a time unit based on a downlink timing of the terminal device, and the second time unit is determined based on the at least one of n, n+k and n+m.

In some embodiments, a downlink timing of the terminal device includes at least one second downlink time unit that overlaps wholly or partially with a time unit determined based on the at least one of n, n+k and n+m, the at least one second downlink time unit including the second time unit.

In some embodiments, the at least one second downlink time unit is a plurality of second downlink time units, and the second time unit is any one of the plurality of second downlink time units or a latest second downlink time unit of the plurality of second downlink time units.

In some embodiments, the third offset indicates an enhanced offset for the uplink timing of the terminal device.

In some embodiments, the second offset is 0 when a downlink timing of the network device is aligned with an uplink timing of the network device.

In some embodiments, the first time unit is determined according to n+k.

In some embodiments, the first time unit is determined according to n+k in a case that two or more HARQ processes are configured in a first device.

In some embodiments, the first time unit is determined according to n.

In some embodiments, the first time unit is determined according to n in a case that one HARQ process is configured in a first device.

In some embodiments, the second time unit is determined according to n+k.

In some embodiments, the second time unit is determined according to n+k in an FDD scenario.

In some embodiments, the second time unit is determined according to n+m.

In some embodiments, the second time unit is determined according to n+m in a TDD scenario.

In some embodiments, in a case that two or more HARQ processes are configured in a first device and in an FDD scenario, the first time unit is at least one of: n+k-2, n+k-2-O₁ and n+k-2-O₃; where O₁ denotes a first offset, O₃ denotes a third offset, the first offset indicates an offset between an uplink timing and a downlink timing of the terminal device, and the third offset is greater than the first offset.

In some embodiments, in a case where two or more HARQ processes are configured in a first device and in an FDD scenario, the second time unit is at least one of: n+k-1, n+k-1+O₂, n+k and n+k+O₂; where O₂ denotes a second offset, and the second offset is configured by a network device.

In some embodiments, in a case where two or more HARQ processes are configured in a first device and in a TDD scenario, the first time unit is at least one of: n+k, n+k-O₁ and n+k-O₃; where O₁ denotes a first offset, O₃ denotes a third offset, the first offset indicates an offset between an uplink timing and a downlink timing of the terminal device, and the third offset is greater than the first offset.

In some embodiments, in a case where two or more HARQ processes are configured in a first device and in an FDD scenario, the second time unit is at least one of: n+m-1, n+m-1+O₂, n+m and n+m+O₂; where O₂ denotes a second offset, and the second offset is configured by a network device.

In some embodiments, in a case that one HARQ process is configured in a first device and in an FDD scenario, the first time unit is at least one of: n+1, n+1-O₁ and n+1-O₃; where O₁ denotes a first offset, O₃ denotes a third offset, the first offset indicates an offset between an uplink timing and a downlink timing of the terminal device, and the third offset is greater than the first offset.

In some embodiments, in a case that one HARQ process is configured in a first device and in an FDD scenario, the second time unit is at least one of: n+k-1, n+k-1+O₂, n+k and n+k+O₂; where O₂ denotes a second offset, and the second offset is configured by a network device.

In some embodiments, in a case that one HARQ process is configured in a first device and in a TDD scenario, the first time unit is at least one of: n+1, n+1-O₁ and n+1-O₃; where O₁ denotes a first offset, O₃ denotes a third offset, the first offset indicates an offset between an uplink timing and a downlink timing of the terminal device, and the third offset is greater than the first offset.

In some embodiments, in a case that one HARQ process is configured in a first device and in a TDD scenario, the second time unit is at least one of: n+m-1, n+m-1+O₂, n+m and n+m+O₂; where O₂ denotes a second offset, and the second offset is configured by a network device.

In some embodiments, in a case that two or more HARQ processes are configured in a first device, a time unit(s) before the first time unit is not used for monitoring of a second control channel for scheduling a second shared channel; where transmission of the second shared channel ends after a third time unit, and a length of time between the third time unit and the first time unit is a first preset value.

In some embodiments, the first preset value is P+2.

In some embodiments, P is 255, or P is an integer less than 255.

In some embodiments, the communication unit 410 is further configured to: receive configuration information for determining at least one of a first offset, a second offset and a third offset, where the first time unit is determined according to at least one of n, n+k and n+m and at least one of the first offset, the second offset and the third offset, and the second time unit is determined according to at least one of n, n+k and n+m and at least one of the first offset, the second offset and the third offset.

The terminal device 400 illustrated in FIG. 19 may correspond to a respective subject in the method 300 for performing the embodiments of the present disclosure, and the aforementioned and other operations and/or functions of various units in the terminal device 400 are designed to implement the respective flows in various methods in FIG. 16, respectively. As illustrated in FIG. 19, the terminal device 400 may include a communication unit 410 and a processing unit 420.

The communication unit 410 is configured to transmit a first shared channel.

The processing unit 420 is configured to not monitor a control channel candidate and/or does not receive data during a half-duplex guard period or at any time unit between a first time unit and a second time unit. The first time unit is determined according to s, the second time unit is determined according to s, and s denotes a time unit where transmission of the first shared channel ends.

In some embodiments, the terminal device is in an FDD scenario; and/or, the half-duplex guard period includes a configured Type B half-duplex guard period.

In some embodiments, the s is a time unit based on a downlink timing of the terminal device; the first time unit is determined based on the s and a first offset, or the first time unit is determined based on the s and a third offset; the first offset indicates an offset between an uplink timing and the downlink timing of the terminal device, and the third offset is greater than the first offset.

In some embodiments, the s is a time unit based on an uplink timing of the terminal device, and the first time unit is determined based on the s.

In some embodiments, the s is a time unit based on a downlink timing of the terminal device, and the first time unit is determined based on the s and a second offset, the second offset being configured by a network device.

In some embodiments, the s is a time unit based on a downlink timing of the terminal device, and the first time unit is determined based on the s.

In some embodiments, at least one first downlink time unit that overlaps wholly or partially with a time unit determined based on the s is included in the downlink timing of the terminal device, the at least one first downlink time unit including the first time unit.

In some embodiments, the at least one first downlink time unit is a plurality of first downlink time units, and the first time unit is any one of the plurality of first downlink time units or an earliest first downlink time unit of the plurality of first downlink time units.

In some embodiments, the s is a time unit based on a downlink timing of the terminal device; the second time unit is determined based on the s and a first offset, or the second time unit is determined based on the s and a third offset; the first offset indicates an offset between an uplink timing and the downlink timing of the terminal device, and the third offset is greater than the first offset.

In some embodiments, the s is a time unit based on an uplink timing of the terminal device, and the second time unit is determined based on the s.

In some embodiments, the s is a time unit based on a downlink timing of the terminal device, and the second time unit is determined based on the s and a second offset, the second offset being configured by a network device.

In some embodiments, the s is a time unit based on a downlink timing of the terminal device, and the second time unit is determined based on the s.

In some embodiments, at least one second downlink time unit that overlaps wholly or partially with a time unit determined based on the s is included in the downlink timing of the terminal device, the at least one second downlink time unit including the second time unit.

In some embodiments, the at least one second downlink time unit is a plurality of second downlink time units, and the second time unit is any one of the plurality of second downlink time units or a latest second downlink time unit of the plurality of second downlink time units.

In some embodiments, the third offset indicates an enhanced offset for the uplink timing of the terminal device.

In some embodiments, the second offset is 0 when a downlink timing of the network device is aligned with an uplink timing of the network device.

In some embodiments, the first time unit is at least one of: s+1, s+1-O₁ and s+1-O₃; where O₁ denotes a first offset, O₃ denotes a third offset, the first offset indicates an offset between an uplink timing and a downlink timing of the terminal device, and the third offset is greater than the first offset.

In some embodiments, the second time unit is at least one of: s, s+1, s+O₂ and s+1+O₂; where O₂ denotes a second offset, and the second offset is configured by a network device.

In some embodiments, the communication unit 410 is further configured to: receive configuration information for determining at least one of a first offset, a second offset and a third offset, where the first time unit is determined according to s and at least one of the first offset, the second offset and the third offset, and the second time unit is determined according to s and at least one of the first offset, the second offset and the third offset.

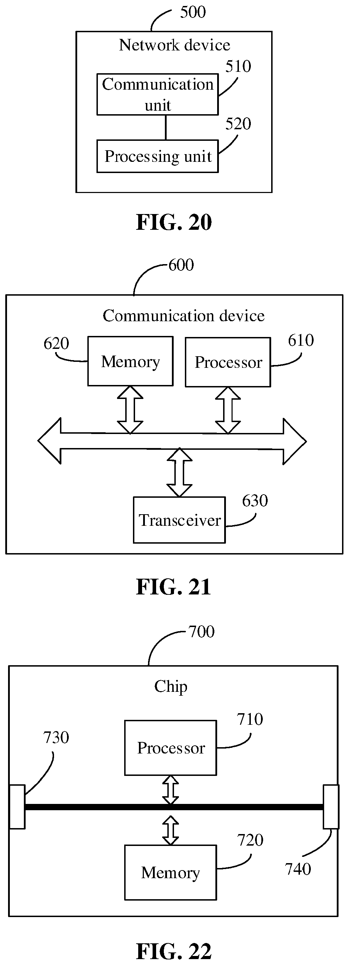

FIG. 20 is a schematic block diagram of a network device 500 according to an embodiment of the present disclosure.

The network device 500 illustrated in FIG. 20 may correspond to a respective subject in the method 200 for performing the embodiments of the present disclosure, and the aforementioned and other operations and/or functions of various units in the network device 500 are designed to implement the respective flows in various methods in FIG. 13, respectively. As illustrated in FIG. 20, the network device 500 may include a communication unit 510 and a processing unit 520.

The communication unit 510 is configured to transmit a first control channel, the first control channel corresponding to a first shared channel.

The processing unit 520 is configured to not transmit a control channel candidate at any time unit between a first time unit and a second time unit.

The first time unit is determined according to at least one of n, n+k and n+m, the second time unit is determined according to at least one of n, n+k and n+m; n denotes a time unit where the first control channel ends, n+k denotes a time unit where transmission of the first shared channel starts, and n+m denotes a time unit where the transmission of the first shared channel ends.

In some embodiments, the first time unit is determined according to n+k.

In some embodiments, the first time unit is determined according to n+k in a case that two or more HARQ processes are configured in a first device.

In some embodiments, the first time unit is determined according to n.

In some embodiments, the first time unit is determined according to n in a case that one HARQ process is configured in a first device.

In some embodiments, the second time unit is determined according to n+k.

In some embodiments, the second time unit is determined according to n+k in an FDD scenario.

In some embodiments, the second time unit is determined according to n+m.

In some embodiments, the second time unit is determined according to n+m in a TDD scenario.

In some embodiments, the communication unit 510 is further configured to: transmit configuration information for determining at least one of a first offset, a second offset and a third offset, where the first time unit is determined according to at least one of n, n+k and n+m and at least one of the first offset, the second offset and the third offset, and the second time unit is determined according to at least one of n, n+k and n+m and at least one of the first offset, the second offset and the third offset.

The network device 500 illustrated in FIG. 20 may correspond to a respective subject in the method 300 for performing embodiments of the present disclosure, and the aforementioned and other operations and/or functions of various units in the network device 500 are designed to implement the respective flows in various methods in FIG. 16, respectively. As illustrated in FIG. 20, the network device 500 may include a communication unit 510 and a processing unit 520.

The communication unit 510 is configured to receive a first shared channel.

The processing unit 520 is configured to not transmit a control channel candidate and/or not transmit data during a half-duplex guard period or at any time unit between a first time unit and a second time unit. The first time unit is determined according to s, the second time unit is determined according to s, and s denotes a time unit where the transmission of the first shared channel ends.

In some embodiments, the terminal device is in an FDD scenario; and/or, the half-duplex guard period includes a configured Type B half-duplex guard period.

In some embodiments, the communication unit 510 is further configured to: transmit configuration information for determining at least one of a first offset, a second offset and a third offset, where the first time unit is determined according to s and at least one of the first offset, the second offset and the third offset, and the second time unit is determined according to s and at least one of the first offset, the second offset and the third offset.

The communication device of the embodiments of the present disclosure is described above from the perspective of functional modules with reference to the accompanying drawings. It should be understood that the functional modules may be implemented in hardware form, or by instructions in software form, or by a combination of hardware and software modules. In particular, each operation of the method embodiments in the embodiments of the present disclosure may be completed by the integrated logic circuit of the hardware in the processor and/or the instruction in the form of software, and the operations of the method disclosed in combination with the embodiments of the present disclosure may be directly embodied as the execution of the hardware decoding processor or the combined execution of the hardware and software modules in the decoding processor. Optionally, the software modules may be located in a random access memory, a flash memory, a read-only memory, a programmable read-only memory or an electrically erasable programmable memory, a register and other mature storage media in the art. The storage medium is located in the memory, and the processor reads information in the memory to complete the operations of the aforementioned method embodiments in conjunction with its hardware.

For example, the processing unit and the communication unit referred to above may be implemented by a processor and a transceiver respectively.

FIG. 6 is a schematic structural diagram of a communication device 600 according to an embodiment of the present disclosure.

As illustrated in FIG. 6, the communication device 600 may include a processor 610.

The processor 610 may call and execute a computer program from the memory to implement the methods in the embodiments of the present disclosure.

As illustrated in FIG. 6, the communication device 600 may also include a memory 620.

The memory 620 may be used for storing indication information and may also be used for storing codes, instructions and the like executed by the processor 610. The processor 610 may call and execute a computer program from the memory 620 to implement the method in the embodiments of the present disclosure. The memory 620 may be a separate device independent of the processor 610 or may be integrated in the processor 610.

As illustrated in FIG. 6, the communication device 600 may also include a transceiver 630.

The processor 610 may control the transceiver 630 to communicate with other devices, in particular to send information or data to other devices, or receive information or data sent by other devices. The transceiver 630 may include a transmitter and a receiver. The transceiver 630 may further include antennas. The number of the antennas may be one or more.

It should be understood that the various components in the communication device 600 are connected by a bus system. The bus system includes a power bus, a control bus and a status signal bus in addition to a data bus.

It will be understood that the communication device 600 may be a terminal device of the embodiments of the present disclosure, and the communication device 600 may implement corresponding processes implemented by the terminal device in the respective methods of the embodiment of the present disclosure, that is, the communication device 600 of embodiments of the present disclosure may correspond to the communication device 400 of embodiments of the present disclosure and may correspond to the corresponding subject executing method 200 of the present disclosure embodiment, which will not be repeated here for the sake of brevity. Similarly, the communication device 600 may be a network device of embodiments of the present disclosure, and the communication device 600 may implement corresponding processes implemented by the network device in the respective methods of the embodiment of the present disclosure. That is, the communication device 600 of the embodiments of the present disclosure may correspond to the communication device 500 of the embodiments of the present disclosure and may correspond to a corresponding subject executing the method 200 according to the embodiments of the present disclosure, which will not be repeated here for the sake of brevity.

In addition, in an embodiment of the present disclosure, there is further provided a chip.

For example, the chip may be an integrated circuit chip, which has signal processing capabilities and may implement or perform the methods, operations and logic diagrams disclosed in embodiments of the present disclosure. The chip may also be referred to as system-level chip, system chip, chip system or system-on-chip or the like. Optionally, the chip may be applied to various communication devices, so that the communication devices equipped with the chip may perform the methods, operations and logic block diagrams disclosed in embodiments of the present disclosure.

FIG. 22 is a schematic structural diagram of a chip 700 according to a non-claimed embodiment of the present disclosure.

As illustrated in FIG. 22, the chip 700 may include a processor 710.

The processor 710 may call and execute a computer program from the memory to implement the methods in the embodiments of the present disclosure.

As illustrated in FIG. 22, the chip 700 may also include a memory 720.

The processor 710 may call and execute a computer program from the memory 720 to implement the methods in the embodiments of the present disclosure. The memory 720 may be used for storing indication information and may also be used for storing codes, instructions and the like executed by the processor 710. The memory 720 may be a separate device independent of the processor 710 or may be integrated in the processor 710.

As illustrated in FIG. 22, the chip 700 may include an input interface 730.

The processor 710 may control the input interface 730 to communicate with other devices or chips, and in particular obtain information or data sent by other devices or chips.

As illustrated in FIG. 22, the chip 700 may include an output interface 740.

The processor 710 may control the output interface 740 to communicate with other devices or chips, in particular to output information or data to other devices or chips.

It should be understood that the chip 700 may be applied to be the network device of the embodiments of the present disclosure, and the chip may implement corresponding processes implemented by the network device and the terminal device in various methods of the embodiments of the present disclosure, which will not be repeated here for the sake of brevity.

It should be understood that the various components in the chip 700 are connected by a bus system. The bus system includes a power bus, a control bus and a status signal bus in addition to a data bus.

The processors referred to above may include, but are not limited to: a general purpose processor, a digital signal processor (DSP), an application specific integrated circuit (ASIC), a field programmable gate array (FPGA) or other programmable logic devices, discrete gates or transistor logic devices, or discrete hardware components and the like.

The processor may implement or execute the methods, operations and logic diagrams disclosed in the embodiments of the present disclosure. The operations of the method disclosed in the embodiments of the present disclosure may be directly embodied as being executed by a hardware decoding processor or being executed by the combination of hardware and software modules in a decoding processor. The software modules may be located in a random access memory, a flash memory, a read-only memory, a programmable read-only memory or an erasable programmable memory, a register and other mature storage media in the art. The storage medium is located in the memory, and the processor reads the information in the memory to complete the operations of the aforementioned method in conjunction with its hardware.

The memory referred to above includes, but is not limited to: a volatile memory and/or a non-volatile memory. The non-volatile memory may be a read-only memory (ROM), a programmable ROM (PROM), an erasable PROM (EPROM), an electrically EPROM (EPROM) or a flash memory. The volatile memory may be a random access memory (RAM), which serves as an external cache. By way of illustration but not limitation, many forms of RAM are available, such as a static RAM (SRAM), a dynamic RAM (DRAM), a synchronous DRAM (SDRAM), a double data rate SDRAM (DDR SDRAM), an enhanced SDRAM (ESDRAM), a synchronous link DRAM (SLDRAM), a direct rambus RAM (DR RAM).

It should be noted that the memory described herein is intended to include these and any other suitable types of memory.

In an embodiment of the present disclosure, there is further provided a computer-readable storage medium, which is configured to store a computer program. The computer-readable storage medium stores one or more programs including instructions that, when executed by a portable electronic device including a plurality of applications, cause the portable electronic device to perform the method of the embodiments of method 200 or method 300. Optionally, the computer-readable storage medium may be applied to the network device of the embodiments of the present disclosure, and the computer program causes a computer to implement corresponding processes implemented by the network device in the methods of the embodiments of the present disclosure, which will not be repeated here for the sake of brevity. Optionally, the computer-readable storage medium may be applied to the mobile terminal/the terminal device of the embodiments of the present disclosure, and the computer program causes a computer to implement corresponding processes implemented by the mobile terminal/the terminal device in the methods of the embodiments of the present disclosure, which will not be repeated here for the sake of brevity.

In an embodiment of the present disclosure, there is further provided a computer program product, which includes a computer program. Optionally, the computer program product may be applied to the network device of the embodiments of the present disclosure, and the computer program causes a computer to implement corresponding processes implemented by the network device in the methods of the embodiments of the present disclosure, which will not be repeated here for the sake of brevity. Optionally, the computer program product may be applied to the mobile terminal/the terminal device of the embodiments of the present disclosure, and the computer program causes a computer to implement corresponding processes implemented by the mobile terminal/the terminal device in the methods of the embodiments of the present disclosure, which will not be repeated here for the sake of brevity.

In an embodiment of the present disclosure, there is further provided a computer program. The computer program, when being executed by a computer, causes the computer to execute the method of the embodiments illustrated in method 200 or method 300. Optionally, the computer program may be applied to the network device of the embodiments of the present disclosure, the computer program, when running on a computer, causes the computer to implement corresponding processes implemented by the network device in the methods of the embodiments of the present disclosure, which will not be repeated here for the sake of brevity. Optionally, the computer program may be applied to the mobile terminal/terminal device of the embodiments of the present disclosure, the computer program, when running on a computer, causes the computer to implement corresponding processes implemented by the mobile terminal/terminal device in the methods of the embodiments of the present disclosure, which will not be repeated here for the sake of brevity.

In an embodiment of the present disclosure, there is further provided a communication system, which may include the above terminal device and network device to form the communication system 100 as illustrated in FIG. 1, which will not be repeated here for the sake of brevity. It should be noted that the term "system" herein may also be referred to as "a network management architecture" or "a network system".

It should also be understood that the term used in the embodiments of the present disclosure and the appended claims is for the purpose of describing specific embodiments only and is not intended to limit the embodiments of the present disclosure. For example, the singular forms of "a", "said", "above" and "the" as used in embodiments of the present disclosure and the appended claims are also intended to include a plural form, unless the context clearly indicates otherwise.

Those skilled in the art may realize that the various example units and algorithm steps described in connection with the embodiments disclosed herein may be implemented in electronic hardware or a combination of computer software and electronic hardware. Whether these functions are performed in hardware or software depends on the specific application and design constraints of the technical solution. Professionals may use different methods for each particular application to implement the described functionality, but such implementation should not be considered beyond the scope of embodiments of the present disclosure. When the functions are realized in the form of software functional units and sold or used as an independent product, they may be stored in a computer readable storage medium. Based on such an understanding, the technical solutions according to the embodiments of the present disclosure, in essence or the part contributing to the prior art, or part of the technical solutions may be embodied in the form of a software product. The computer software product is stored in a storage medium, and includes several instructions so that a computer device (which may be a personal computer, a server, a network device or the like) implements all or part of the method according to embodiments of the disclosure. The aforementioned storage medium includes various media capable of storing a program code such as a USB disk, a mobile hard drive disk, a read-only memory, a random access memory, a magnetic disk or an optical disk.

Those skilled in the art will appreciate that, for convenience and conciseness of description, the specific operating processes of the above-described systems, apparatuses and units may refer to the corresponding processes in the aforementioned method embodiments and will not be repeated herein. In several embodiments provided herein, it should be understood that the disclosed systems, apparatuses and methods may be implemented in other manners. For example, the partition of units or modules or components in the above-described apparatus embodiment is only a logical functional partition, which may be implemented by another manner in actual implementation, for example, multiple units or modules or components may be combined or integrated into another system, or some units or modules or components may be ignored or not executed. For another example, the units/modules/components described above as separation/display elements may or may not be physically separated, i.e. may be located in a place, or may be distributed over a plurality of network elements. Part or all of the units/modules/components may be selected according to the actual needs to achieve the purpose of the embodiments of the present disclosure. Finally, it should be noted that the coupling or direct coupling or communication connection between each other illustrated or discussed may be indirect coupling or communication connection through some interfaces, apparatuses or units, and may be electrical, mechanical or other form.

## Claims

1. A wireless communication method, the method comprising
receiving (S210), by a terminal device, a first control channel, the first control channel corresponding to a first shared channel; and
not monitoring (S220), by the terminal device, a control channel candidate at any time unit between a first time unit and a second time unit;
wherein the first time unit is determined according to at least one of n, n+k and n+m, the second time unit is determined according to at least one of n, n+k and n+m; n denotes a time unit where the first control channel ends, n+k denotes a time unit where transmission of the first shared channel starts, and n+m denotes a time unit where the transmission of the first shared channel ends,
**characterised in that** at least one first downlink time unit that overlaps wholly or partially with a time unit determined based on the at least one of n, n+k and n+m is comprised in a downlink timing of the terminal device, the at least one first downlink time unit comprising the first time unit.

2. The method of claim 1, wherein the at least one of n, n+k and n+m is a time unit based on an uplink timing of the terminal device, and the first time unit is determined based on the at least one of n, n+k and n+m.

3. The method of claim 1, wherein the at least one of n, n+k and n+m is a time unit based on the downlink timing of the terminal device, and the first time unit is determined based on the at least one of n, n+k and n+m.

4. The method of claim 1, wherein the at least one first downlink time unit is a plurality of first downlink time units, and the first time unit is any one of the plurality of first downlink time units or an earliest first downlink time unit of the plurality of first downlink time units.

5. The method of any one of claims 1 to 4, wherein the at least one of n, n+k and n+m is a time unit based on an uplink timing of the terminal device, and the second time unit is determined based on the at least one of n, n+k and n+m.

6. The method of any one of claims 1 to 5, wherein at least one second downlink time unit that overlaps wholly or partially with the time unit determined based on the at least one of n, n+k and n+m is comprised in the downlink timing of the terminal device, the at least one second downlink time unit comprising the second time unit.

7. The method of claim 6, wherein the at least one second downlink time unit is a plurality of second downlink time units, and the second time unit is any one of the plurality of second downlink time units or a latest second downlink time unit of the plurality of second downlink time units.

8. A wireless communication method, the method comprising
transmitting (S210), by a network device, a first control channel, the first control channel corresponding to a first shared channel; and
not transmitting (S230), by the network device, a control channel candidate at any time unit between a first time unit and a second time unit;
wherein the first time unit is determined according to at least one of n, n+k and n+m, the second time unit is determined according to at least one of n, n+k and n+m; n denotes a time unit where the first control channel ends, n+k denotes a time unit where transmission of the first shared channel starts, and n+m denotes a time unit where the transmission of the first shared channel ends,
**characterised in that** at least one first downlink time unit that overlaps wholly or partially with a time unit determined based on the at least one of n, n+k and n+m is comprised in a downlink timing of the terminal device, the at least one first downlink time unit comprising the first time unit.

9. The method of claim 8, wherein the at least one of n, n+k and n+m is a time unit based on an uplink timing of the terminal device, and the first time unit is determined based on the at least one of n, n+k and n+m.

10. The method of claim 8, wherein the at least one of n, n+k and n+m is a time unit based on the downlink timing of the terminal device, and the first time unit is determined based on the at least one of n, n+k and n+m.

11. The method of any one of claims 8 to 10, wherein the at least one of n, n+k and n+m is a time unit based on an uplink timing of the terminal device, and the second time unit is determined based on the at least one of n, n+k and n+m.

12. A terminal device, comprising:
a processor (610), a memory (620) and a transceiver (630), wherein the memory (620) is configured to store a computer program, and the processor (610) is configured to cooperate with the transceiver (630) to implement the method of any one of claims 1 to 7.

13. A network device, comprising:
a processor (610), a memory (620) and a transceiver (630), wherein the memory (620) is configured to store a computer program, and the processor (610) is configured to cooperate with the transceiver (630) to implement the method of any one of claims 8 to 11.

## Patentansprüche

1. Drahtloskommunikationsverfahren, wobei das Verfahren umfasst:
Empfangen (S210), durch eine Endgerätevorrichtung, eines ersten Steuerkanals, wobei der erste Steuerkanal einem ersten gemeinsam genutzten Kanal entspricht; und
kein Überwachen (S220), durch die Endgerätevorrichtung, eines Steuerkanalkandidaten in irgendeiner Zeiteinheit zwischen einer ersten Zeiteinheit und einer zweiten Zeiteinheit;
wobei die erste Zeiteinheit gemäß wenigstens einem von n, n+k und n+m bestimmt wird, die zweite Zeiteinheit gemäß wenigstens einem von n, n+k und n+m bestimmt wird;
n eine Zeiteinheit bezeichnet, in der der erste Steuerkanal endet, n+k eine Zeiteinheit bezeichnet, in der die Übertragung des ersten gemeinsam genutzten Kanals beginnt, und n+m eine Zeiteinheit bezeichnet, in der die Übertragung des ersten gemeinsam genutzten Kanals endet,
**dadurch gekennzeichnet, dass**
wenigstens eines von der ersten Downlink-Zeiteinheit, die ganz oder teilweise mit einer Zeiteinheit überlappt, die basierend auf wenigstens n, n+k und n+m bestimmt wird, in einem Downlink-Timing der Endgerätevorrichtung enthalten ist, wobei die wenigstens eine erste Downlink-Zeiteinheit die erste Zeiteinheit umfasst.

2. Verfahren nach Anspruch 1, wobei das wenigstens eine von n, n+k und n+m eine Zeiteinheit ist, die auf einem Uplink-Timing der Endgerätevorrichtung basiert, und die erste Zeiteinheit basierend auf dem wenigstens einen von n, n+k und n+m bestimmt wird.

3. Verfahren nach Anspruch 1, wobei das wenigstens eine von n, n+k und n+m eine Zeiteinheit ist, die auf einem Downlink-Timing der Endgerätevorrichtung basiert, und die erste Zeiteinheit basierend auf dem wenigstens einen von n, n+k und n+m bestimmt wird.

4. Verfahren nach Anspruch 1, wobei die wenigstens eine erste Downlink-Zeiteinheit eine Mehrzahl von ersten Downlink-Zeiteinheiten ist und die erste Zeiteinheit irgendeine der mehreren ersten Downlink-Zeiteinheiten oder eine früheste erste Downlink-Zeiteinheit der mehreren ersten Downlink-Zeiteinheiten ist.

5. Verfahren nach Anspruch 1 bis 4, wobei das wenigstens eine von n, n+k und n+m eine Zeiteinheit ist, die auf einem Uplink-Timing der Endgerätevorrichtung basiert, und die zweite Zeiteinheit basierend auf dem wenigstens einen von n, n+k und n+m bestimmt wird.

6. Verfahren nach einem der Ansprüche 1 bis 5, wobei wenigstens eine zweite Downlink-Zeiteinheit, die ganz oder teilweise mit der Zeiteinheit überlappt, die basierend auf dem wenigstens einen von n, n+k und n+m bestimmt wird, in dem Downlink-Timing der Endgerätevorrichtung enthalten ist, wobei die wenigstens eine zweite Downlink-Zeiteinheit die zweite Zeiteinheit umfasst.

7. Verfahren nach Anspruch 6, wobei die wenigstens eine zweite Downlink-Zeiteinheit eine Mehrzahl von zweiten Downlink-Zeiteinheiten ist und die zweite Zeiteinheit irgendeine der mehreren zweiten Downlink-Zeiteinheiten oder eine späteste zweite Downlink-Zeiteinheit der mehreren zweiten Downlink-Zeiteinheiten ist.

8. Drahtloskommunikationsverfahren, wobei das Verfahren umfasst:
Übertragen (S210), durch eine Netzwerkvorrichtung, eines ersten Steuerkanals, wobei der erste Steuerkanal einem ersten gemeinsam genutzten Kanal entspricht; und
kein Übertragen (S230), durch die Netzwerkvorrichtung, eines Steuerkanalkandidaten in irgendeiner Zeiteinheit zwischen einer ersten Zeiteinheit und einer zweiten Zeiteinheit;
wobei die erste Zeiteinheit gemäß wenigstens einem von n, n+k und n+m bestimmt wird, die zweite Zeiteinheit gemäß wenigstens einem von n, n+k und n+m bestimmt wird;
n eine Zeiteinheit bezeichnet, in der der erste Steuerkanal endet, n+k eine Zeiteinheit bezeichnet, in der die Übertragung des ersten gemeinsam genutzten Kanals beginnt, und n+m eine Zeiteinheit bezeichnet, in der die Übertragung des ersten gemeinsam genutzten Kanals endet, **dadurch gekennzeichnet, dass**
wenigstens eines von der ersten Downlink-Zeiteinheit, die ganz oder teilweise mit einer Zeiteinheit überlappt, die basierend auf wenigstens n, n+k und n+m bestimmt wird, in einem Downlink-Timing der Endgerätevorrichtung enthalten ist, wobei die wenigstens eine erste Downlink-Zeiteinheit die erste Zeiteinheit umfasst.

9. Verfahren nach Anspruch 8, wobei das wenigstens eine von n, n+k und n+m eine Zeiteinheit ist, die auf einem Uplink-Timing der Endgerätevorrichtung basiert, und die erste Zeiteinheit basierend auf dem wenigstens einen von n, n+k und n+m bestimmt wird.

10. Verfahren nach Anspruch 8, wobei das wenigstens eine von n, n+k und n+m eine Zeiteinheit ist, die auf einem Downlink-Timing der Endgerätevorrichtung basiert, und die erste Zeiteinheit basierend auf dem wenigstens einen von n, n+k und n+m bestimmt wird.

11. Verfahren nach Anspruch 8 bis 10, wobei das wenigstens eine von n, n+k und n+m eine Zeiteinheit ist, die auf einem Uplink-Timing der Endgerätevorrichtung basiert, und die zweite Zeiteinheit basierend auf dem wenigstens einen von n, n+k und n+m bestimmt wird.

12. Endgerät, umfassend:
einen Prozessor (610), einen Speicher (620) und einen Sendeempfänger (630), wobei der Speicher (620) dazu ausgelegt ist, ein Computerprogramm zu speichern, und der Prozessor (610) dazu ausgelegt ist, mit dem Sendeempfänger (630) zusammenzuwirken, um das Verfahren nach einem der Ansprüche 1 bis 7 zu implementieren.

13. Netzwerkvorrichtung, umfassend:
einen Prozessor (610), einen Speicher (620) und einen Sendeempfänger (630), wobei der Speicher (620) dazu ausgelegt ist, ein Computerprogramm zu speichern, und der Prozessor (610) dazu ausgelegt ist, mit dem Sendeempfänger (630) zusammenzuwirken, um das Verfahren nach einem der Ansprüche 8 bis 11 zu implementieren.

## Revendications

1. Procédé de communication sans fil, le procédé comprenant :
la réception (S210), par un dispositif terminal, d'un premier canal de commande, le premier canal de commande correspondant à un premier canal partagé ; et
l'absence de surveillance (S220), par le dispositif terminal, d'un candidat de canal de commande à toute unité de temps entre une première unité de temps et une seconde unité de temps ;
la première unité de temps étant déterminée en fonction d'au moins un de n, n+k et n+m, la seconde unité de temps étant déterminée en fonction d'au moins un de n, n+k et n+m ; n désignant une unité de temps où le premier canal de commande se termine, n+k désignant une unité de temps où la transmission du premier canal partagé commence, et n+m désignant une unité de temps où la transmission du premier canal partagé se termine,
**caractérisé en ce qu'**au moins une première unité de temps de liaison descendante qui se chevauche entièrement ou partiellement avec une unité de temps déterminée sur la base de l'au moins un de n, n+k et n+m est comprise dans une temporisation de liaison descendante du dispositif terminal, l'au moins une première unité de temps de liaison descendante comprenant la première unité de temps.

2. Procédé selon la revendication 1, l'au moins un de n, n+k et n+m étant une unité de temps basée sur une temporisation de liaison montante du dispositif terminal, et la première unité de temps étant déterminée sur la base de l'au moins un de n, n+k et n+m.

3. Procédé selon la revendication 1, l'au moins un de n, n+k et n+m étant une unité de temps basée sur la temporisation de liaison descendante du dispositif terminal, et la première unité de temps étant déterminée sur la base de l'au moins un de n, n+k et n+m.

4. Procédé selon la revendication 1, l'au moins une première unité de temps de liaison descendante étant une pluralité de premières unités de temps de liaison descendante, et la première unité de temps étant l'une quelconque de la pluralité de premières unités de temps de liaison descendante ou une première unité de temps de liaison descendante la plus ancienne de la pluralité de premières unités de temps de liaison descendante.

5. Procédé selon l'une quelconque des revendications 1 à 4, l'au moins un de n, n+k et n+m étant une unité de temps basée sur une temporisation de liaison montante du dispositif terminal, et la seconde unité de temps étant déterminée sur la base de l'au moins un de n, n+k et n+m.

6. Procédé selon l'une quelconque des revendications 1 à 5, au moins une seconde unité de temps de liaison descendante qui se chevauche entièrement ou partiellement avec l'unité de temps déterminée sur la base de l'au moins un de n, n+k et n+m étant comprise dans la temporisation de liaison descendante du dispositif terminal, l'au moins une seconde unité de temps de liaison descendante comprenant la seconde unité de temps.

7. Procédé selon la revendication 6, l'au moins une seconde unité de temps de liaison descendante étant une pluralité de secondes unités de temps de liaison descendante, et la seconde unité de temps étant l'une quelconque de la pluralité de secondes unités de temps de liaison descendante ou une seconde unité de temps de liaison descendante la plus récente de la pluralité de secondes unités de temps de liaison descendante.

8. Procédé de communication sans fil, le procédé comprenant :
la transmission (S210), par un dispositif de réseau, d'un premier canal de commande, le premier canal de commande correspondant à un premier canal partagé ; et
la non-transmission (S230), par le dispositif de réseau, d'un candidat de canal de commande à n'importe quelle unité de temps entre une première unité de temps et une seconde unité de temps,
la première unité de temps étant déterminée en fonction d'au moins un de n, n+k et n+m, la seconde unité de temps étant déterminée en fonction d'au moins un de n, n+k et n+m ; n désignant une unité de temps où le premier canal de commande se termine, n+k désignant une unité de temps où la transmission du premier canal partagé commence, et n+m désignant une unité de temps où la transmission du premier canal partagé se termine,
**caractérisé en ce qu'**au moins une première unité de temps de liaison descendante qui se chevauche entièrement ou partiellement avec une unité de temps déterminée sur la base de l'au moins un de n, n+k et n+m est comprise dans une temporisation de liaison descendante du dispositif terminal, l'au moins une première unité de temps de liaison descendante comprenant la première unité de temps.

9. Procédé selon la revendication 8, l'au moins un de n, n+k et n+m étant une unité de temps basée sur une temporisation de liaison montante du dispositif terminal, et la première unité de temps étant déterminée sur la base de l'au moins un de n, n+k et n+m.

10. Procédé selon la revendication 8, l'au moins un de n, n+k et n+m étant une unité de temps basée sur la temporisation de liaison descendante du dispositif terminal, et la première unité de temps étant déterminée sur la base de l'au moins un de n, n+k et n+m.

11. Procédé selon l'une quelconque des revendications 8 à 10, l'au moins un de n, n+k et n+m étant une unité de temps basée sur une temporisation de liaison montante du dispositif terminal, et la seconde unité de temps étant déterminée sur la base de l'au moins un de n, n+k et n+m.

12. Dispositif terminal, comprenant :
un processeur (610), une mémoire (620) et un émetteur-récepteur (630), la mémoire (620) étant configurée pour stocker un programme informatique, et le processeur (610) étant configuré pour coopérer avec l'émetteur-récepteur (630) pour mettre en œuvre le procédé selon l'une quelconque des revendications 1 à 7.

13. Dispositif de réseau, comprenant :
un processeur (610), une mémoire (620) et un émetteur-récepteur (630), la mémoire (620) étant configurée pour stocker un programme informatique, et le processeur (610) étant configuré pour coopérer avec l'émetteur-récepteur (630) pour mettre en œuvre le procédé selon l'une quelconque des revendications 8 à 11.
